# EUROPEAN PATENT APPLICATION

(11) **EP 4 827 085 A1**
(43) Date of publication of application: **21.10.2026**
(21) Application number: 25315129.4
(22) Date of filing: 16.04.2025
(51) Int. Cl.: H04N 19/103, H04N 19/11, H04N 19/136, H04N 19/70

(54) **MODE CONFIGURATION USING SPATIAL INFORMATION IN VIDEO CODING**

(71) Applicant: Beijing Xiaomi Mobile Software Co., Ltd., Beijing Beijing 100085 (CN)
(72) Inventor: Ghaznavi Youvalari, Ramin, Beijing, 100085 (CN); Tissier, Alexandre, Beijing, 100085 (CN); Abdoli, Mohsen, Beijing, 100085 (CN); Plowman, Frank, Beijing, 100085 (CN)
(74) Representative: Schenk, Markus

(57) **Abstract**

Describes is a method of block-wise decoding a picture from a data stream, the method comprising: decoding a currently decoded block of the picture, using a selected coding option out of an activated set of one or more coding options which is configured for the currently decoded block based on spatial information of the currently decoded block, or using a selected coding option responsive to the selected coding option being selected by a mode selection syntax element, wherein the mode selection syntax element is context-adaptively decoded from the data stream using a context selected based on the spatial information of the currently decoded block, block-wise predicting the picture to obtain a predictor for blocks of the picture, and transform-decoding a prediction residual for the blocks.

## Description

### Technical Field

The present disclosure generally relates to the field of encoding/decoding pictures, images or videos, and embodiments of the present disclosure concern improvements for obtaining a prediction for a block of a picture based on blending or fusing two or more prediction signals. More specific embodiments of the present disclosure relate to the methods and apparatus for processing one or more blocks of a picture, using different configurations for fusion-based prediction processes, so that a prediction may be optimized with regard to an amount of fusion used by the fusion-based prediction process.

### Background

The encoding and decoding of a picture, an image or a video is performed in accordance with a certain standard, for example, in accordance with the ISO/IEC 14496-10 Advanced Video Coding, AVC, standard (see reference [1]), the ISO/IEC 23094-1 Essential video coding, EVC, standard, the ISO/IEC 23008-2 High Efficiency Video Coding, HEVC, standard (see reference [2]), the ISO/IEC 23090-3 Versatile Video Coding, VVC, standard (see reference [3]) or the AOMedia Video 1, AV1, standard.

For processing a picture, an image or a video, e.g., when encoding and/or decoding of the picture, the image or the video, a state-of-the-art process may predict a block of a picture using intra prediction methods that obtain a prediction for the block based on characteristics of the block.

Thus, there is a need to provide further improvements for processing a block of a picture, an image or a video, e.g., when encoding and/or decoding of the picture, the image or the video.

### Summary

The present disclosure provides a method of block-wise decoding a picture from a data stream, the method comprising:
decoding a currently decoded block of the picture
   using a selected coding option out of an activated set of one or more coding options which is configured for the currently decoded block based on spatial information of the currently decoded block, or
   using a selected coding option responsive to the selected coding option being selected by a mode selection syntax element, wherein the mode selection syntax element is context-adaptively decoded from the data stream using a context selected based on the spatial information of the currently decoded block,
block-wise predicting the picture to obtain a predictor for blocks of the picture, and transform-decoding a prediction residual for the blocks.

In accordance with embodiments, the spatial information relates to or is gained from one or more of the following:
i. a portion of the data stream having a previously decoded portion of the picture coded thereinto, or
ii. one or more syntax elements of the data stream which relate to one or more previously decoded blocks of the picture,
iii. a prediction residual information on one or more previously decoded blocks of the picture, neighboring or overlapping the currently decoded block
iv. whether a previously decoded block of the picture, neighboring or overlapping the currently decoded block, is coded using a set of one or more prediction residual coding options, consisting of one or more out of
   a) a usage of a LFNST (low-frequency non-separable transform) applied onto a primary transform as a transform domain for a prediction residual of the previously decoded block,
   b) a usage of MTS (multiple transform selection) for selecting a transform domain for the prediction residual of the previously decoded block,
v. whether the previously decoded block of the picture, neighboring or overlapping the currently decoded block, has any non-zero transform coefficient representing the prediction residual of the previously decoded block,
vi. a position of a last significant transform coefficient of a transform representing the prediction residual of a previously decoded block of the picture, neighboring or overlapping the currently decoded block, which is lastly traversed and significant when traversing the traversing transform coefficients of the transform along a coding path starting from a transform coefficient position which is inevitably coded if the previously decoded block has at least one non-zero transform coefficient,
vii. a count of previously decoded blocks of the picture within a set of previously decoded blocks of the picture, neighboring or overlapping the currently decoded block, which are coded using a set of one or more prediction residual coding options, consisting of one or more out of
   c) a usage of a LFNST (low-frequency non-separable transform) applied onto a primary transform as a transform domain for a prediction residual of the previously decoded block,
   d) a usage of MTS (multiple transform selection) for selecting a transform domain for the prediction residual of the previously decoded block,
   e) a usage of TS (transform skip) for the prediction residual of the previously decoded block,
viii. a count of previously decoded blocks of the picture, within a set of previously decoded blocks of the picture, neighboring or overlapping the currently decoded block, which have any non-zero transform coefficient representing the prediction residual of the previously decoded block,
ix. a statistical measure of statistics of a position of a last significant transform coefficient of a transform representing the prediction residual of a set of previously decoded blocks of the picture, neighboring or overlapping the currently decoded block, being lastly traversed and significant when traversing the traversing transform coefficients of the transform along a coding path starting from a transform coefficient position which is inevitably coded if the previously decoded block has at least one non-zero transform coefficient,
x. all of a set of previously decoded blocks of the picture, neighboring or overlapping the currently decoded block, are coded using a set of one or more prediction residual coding options, consisting of one or more out of
   f) a usage of a LFNST (low-frequency non-separable transform) applied onto a primary transform as a transform domain for a prediction residual of the previously decoded block,
   g) a usage of MTS (multiple transform selection) for selecting a transform domain for the prediction residual of the previously decoded block,
   h) a usage of TS (transform skip) for the prediction residual of the previously decoded block,
xi. all of a set of previously decoded blocks of the picture, neighboring or overlapping the currently decoded block, which have any non-zero transform coefficient representing the prediction residual of the previously decoded block.

In accordance with embodiments, the one or more coding options of the activated set mutually differ in
coding tool, or
one or more coding parameters of a parametrizable coding tool.

In accordance with embodiments, the activated set of one or more coding options is configured for the currently decoded block based on the spatial information of the block by, for each of a set of coding tools, activating or deactivating the respective coding tool based on the spatial information to obtain an activated set of one or more coding tools, and the method comprises decoding the currently decoded block of the picture using a selected coding tool out of the activated set of one or more coding tools.

In accordance with embodiments, the activated set of one or more coding tools is configured for the currently decoded block such that the activated set of one or more coding tools merely consists of one coding tool which is the selected coding tool,
or wherein the method comprises either
   decoding a number n of mode selection syntax elements, with n ≥ 0, and/or
      one or more mode m-ary selection syntax elements, with m > 0,
      from the data stream, and
   selecting the selected coding mode out of the activated set of one or more coding tools, wherein n or m is set depending on the spatial information, or
depending on a predetermined coding tool out of the set of one or more coding tools, being deactivated or activated based on the spatial information,
   inferring that a predetermined mode selection syntax element specifically associated with the predetermined coding tool, has a state deselecting the predetermined coding tool, or decoding the predetermined mode selection syntax element from the data stream and appointing the predetermined coding tool the selected coding tool depending on the predetermined mode selection syntax element.

In accordance with embodiments,
the activated set of one or more coding options is configured for the currently decoded block such that the activated set of one or more coding options excludes a DIMD tool, and a predetermined mode selection syntax element which is for selecting whether the DIMD tool is to be used for decoding the currently decoded block, and is otherwise decoded from data stream, is inferred to have a state deselecting the DIMD tool,
   and/or
the activated set of one or more coding options is configured for the currently decoded block such that the activated set of one or more coding options excludes a TIMD tool, and a predetermined mode selection syntax element which is for selecting whether the TIMD tool is to be used for decoding the currently decoded block, and is otherwise decoded from data stream, is inferred to have a state deselecting the TIMD tool,
   responsive to
all of a set of previously decoded blocks of the picture, neighboring the currently decoded block, or a more than a predetermined number of previously decoded blocks in said set, being coded using a TS tool and/or
all of a set of previously decoded blocks of the picture, neighboring the currently decoded block, or a more than a predetermined number of previously decoded blocks in said set, being signalled to have a zero prediction residual by way of a corresponding flag in the data stream.

In accordance with embodiments,
the activated set of one or more coding options is configured for the currently decoded block such that the activated set of one or more coding options excludes a LFNST tool, and a predetermined mode selection syntax element which is for selecting whether the LFNST tool is to be used for decoding the currently decoded block, and is otherwise decoded from data stream, is inferred to have a state deselecting the LFNST tool,
responsive to
all of a set of previously decoded blocks of the picture, neighboring the currently decoded block, or a more than a predetermined number of previously decoded blocks in said set, being coded using a TS tool and/or
all of a set of previously decoded blocks of the picture, neighboring the currently decoded block, or a more than a predetermined number of previously decoded blocks in said set, being signalled to have a zero prediction residual by way of a corresponding flag in the data stream.

In accordance with embodiments, the activated set of one or more coding options is configured for the currently decoded block such that the activated set of one or more coding options excludes a TS tool, and a predetermined mode selection syntax element which is for selecting whether the TS tool is to be used for decoding the currently decoded block, and is otherwise decoded from data stream, is inferred to have a state deselecting the TS tool,
responsive to
all of a set of previously decoded blocks of the picture, neighboring the currently decoded block, or a more than a predetermined number of previously decoded blocks in said set, being coded using a LFNST tool.

In accordance with embodiments, the currently decoded block is a chroma block, and the activated set of one or more coding options is configured for the currently decoded block such that the activated set of one or more coding options excludes a JCCR (joint coding of chroma residuals) mode, and a predetermined mode selection syntax element which is for selecting whether the JCCR tool is to be used for decoding the currently decoded block, and is otherwise decoded from data stream, is inferred to have a state deselecting the JCCR tool,
responsive to
a previously decoded co-located luma block of the picture, overlapping the currently decoded block, being coded using a TS tool, and/or
a previously decoded co-located luma block of the picture, overlapping the currently decoded block, being signalled to have a zero prediction residual by way of a corresponding flag in the data stream.

In accordance with embodiments, comprising
based on the spatial information of the block, selecting a selected context out of a set of available contexts for the mode selection syntax element,
context-adaptively arithmetically decoding the mode selection syntax element using a probability estimate of the selected conte
adapting the probability estimate of the selected context based on the mode selection syntax element,
decoding the currently decoded block, depending the mode selection syntax element, using or non-using the selected coding option.

In accordance with embodiments, a first and a second context are defined and selected according to one of the following scenarios:
i1) the first context is selected as the context for context-adaptively decoding the mode syntax element when
   - all of a set of previously decoded blocks of the picture, neighboring the currently decoded block, or a more than a predetermined number of previously decoded blocks in said set, being coded using a TS tool and/or
   - all of a set of previously decoded blocks of the picture, neighboring the currently decoded block, or a more than a predetermined number of previously decoded blocks in said set, being signalled to have a zero prediction residual by way of a corresponding flag in the data stream, and
   the second context is selected as the context for context-adaptively decoding the mode syntax element when
   - not all of a set of previously decoded blocks of the picture, neighboring the currently decoded block, or a more than a predetermined number of previously decoded blocks in said set, being coded using a TS tool and/or
   - not all of a set of previously decoded blocks of the picture, neighboring the currently decoded block, or a more than a predetermined number of previously decoded blocks in said set, being signalled to have a zero prediction residual by way of a corresponding flag in the data stream;
i2) the first context is selected as the context for context-adaptively decoding the mode syntax element when
   - all of a set of previously decoded blocks of the picture, neighboring the currently decoded block, or a more than a predetermined number of previously decoded blocks in said set, being coded using a TS tool and/or
   - all of a set of previously decoded blocks of the picture, neighboring the currently decoded block, or a more than a predetermined number of previously decoded blocks in said set, being signalled to have a zero prediction residual by way of a corresponding flag in the data stream, and
   the second context is selected as the context for context-adaptively decoding the mode syntax element when
   - not all of a set of previously decoded blocks of the picture, neighboring the currently decoded block, or a more than a predetermined number of previously decoded blocks in said set, being coded using a TS tool and/or
   - not all of a set of previously decoded blocks of the picture, neighboring the currently decoded block, or a more than a predetermined number of previously decoded blocks in said set, being signalled to have a zero prediction residual by way of a corresponding flag in the data stream;
i3) the first context is selected as the context for context-adaptively decoding the mode syntax element when
   - all of a set of previously decoded blocks of the picture, neighboring the currently decoded block, or a more than a predetermined number of previously decoded blocks in said set, being coded using a LFNST tool,
   the second context is selected as the context for context-adaptively decoding the mode syntax element when
   - not all of a set of previously decoded blocks of the picture, neighboring the currently decoded block, or a more than a predetermined number of previously decoded blocks in said set, being coded using a LFNST tool;
i4) the first context is selected as the context for context-adaptively decoding the mode syntax element when
   - a previously decoded co-located luma block of the picture, overlapping the currently decoded block, being coded using a TS tool, and/or
   - a previously decoded co-located luma block of the picture, overlapping the currently decoded block, being signalled to have a zero prediction residual by way of a corresponding flag in the data stream,
   the second context is selected as the context for context-adaptively decoding the mode syntax element when
   - a previously decoded co-located luma block of the picture, overlapping the currently decoded block, is not being coded using a MS tool, and/or
   - a previously decoded co-located luma block of the picture, overlapping the currently decoded block, is not being signalled to have a zero prediction residual by way of a corresponding flag in the data stream.

The present disclosure provides a method of block-wise encoding a picture into a data stream, the method comprising:
encoding a currently encoded block of the picture
using a selected coding option out of an activated set of one or more coding options which is configured for the currently encoded block based on spatial information of the currently encoded block, or
using a selected coding option responsive to the selected coding option being selected by a mode selection syntax element, wherein the mode selection syntax element is context-adaptively encoded into the data stream using a context selected based on the spatial information of the currently encoded block.

The present disclosure provides an apparatus for block-wise decoding a picture from a data stream, the apparatus configured to:
decode a currently decoded block of the picture
using a selected coding option out of an activated set of one or more coding options which is configured for the currently decoded block based on spatial information of the currently decoded block, or
using a selected coding option responsive to the selected coding option being selected by a mode selection syntax element, wherein the mode selection syntax element is context-adaptively decoded from the data stream using a context selected based on the spatial information of the currently decoded block.

The present disclosure provides an apparatus for block-wise encoding a picture into a data stream, the apparatus configured to:
encode a currently decoded block of the picture
using a selected coding option out of an activated set of one or more coding options which is configured for the currently decoded block based on spatial information of the currently decoded block, or
using a selected coding option responsive to the selected coding option being selected by a mode selection syntax element, wherein the mode selection syntax element is context-adaptively decoded from the data stream using a context selected based on the spatial information of the currently decoded block.

The present disclosure provides a data stream having encoded there into a picture, wherein the data stream is encoded using the method of block-wise encoding a picture into a data stream, as previously described.

A state-of-the-art process, for processing a picture, an image or a video, e.g., when encoding and/or decoding of the picture, the image or the video may not be useful for a block in terms of coding efficiency and/or complexity, when the block exhibits certain spatial characteristics. For example, using certain transform coding types (such as LFNST) or certain prediction methods (such as DIMD/TIMD) may not be useful when the samples characteristics of the block is very simple. Simple characteristics may be represented as an area of the image with:
- **Solid Colors:** A plain texture with a single color (e.g., a blue or gray background)
- **Gradient Backgrounds:** Smooth transitions from one color to another, such as a sky gradient from blue to white.
- **Simple Stripes:** Vertical or horizontal stripes with uniform spacing and solid colors.
- **Checkerboard Patterns:** A grid of alternating light and dark squares (low-frequency texture).

In such blocks of samples, certain coding tools designed for more complex textures (e.g., LFNST, TIMD, DIMD) are not very useful, thus, the encoder may select tools that can capture such characteristics better. Even though such tools which are intended for complex textures are not used, the associated information is still signaled in the bitstream. Such signaling adds unnecessary bitrate overhead to the compressed bitstream.

It is a basic finding underlying the present application that spatial information of a currently coded block may be used to deduce an activated set of one or more coding options for the currently coded block out of which a selected coding option is finally taken so as to be used for coding the currently decoded block, or that a mode selection syntax element may be context-adaptively coded in the data stream using a context selected based on the spatial information of the currently coded block, with coding the currently coded block using the selected coding option depending on the mode selection syntax element. In both cases, the usage of the spatial information achieves a better adaption of the signaling overhead associated with mode selection to the actual picture content. By deactivating some coding options, the signaling multiplicity may be reduced leading to one or more mode syntax elements which might be inferred at the decider rather than being actually signaled (encoded/decoded), and by spending more contexts among which a selection is mode depending on the spatial information, the probability for the states of one or more mode selection syntax elements may be better adapted to the picture content. According to embodiments, one or more prediction residual or mode selection related syntax elements of one or more previously coded blocks, neighboring or even overlapping the currently coded block, are used to gain the spatial information as a measure for complexity of the picture content at the currently coded block.

In this invention, various methods and embodiments are proposed in order to configure certain coding tools to be activated or deactivated for a block based on spatial information of that block.

It is to be understood that the content described in this section is not intended to identify key or critical features of the embodiment of the present disclosure, nor is it intended to limit the scope of the present disclosure. Other features of the present disclosure become readily apparent from the following description.

### Brief Description of the Drawings

- Fig. 1: is a block diagram of a conventional video encoder,
- Fig. 2: is a block diagram of a conventional video decoder,
- Fig. 3: illustrates a Low-Frequency Non-Separable Transform (LFNST) process,
- Fig. 4: illustrates template-based intra mode derivation (TIMD) templates for a cost calculation or determination,
- Fig. 5: illustrates an example of neighbor positions scanned for determining mode activation/deactivation,
- Fig. 6: illustrates a data stream in accordance with embodiments of the present disclosure, and
- Fig. 7: illustrates a block diagram illustrating an electronic device according to embodiments of the present disclosure.

The drawings are explanatory and serve to explain the present disclosure, and are not to be construed to limit the present disclosure to the illustrated embodiments.

Illustrative embodiments of the present disclosure are described below with reference to the drawings, where various details of the embodiments of the present disclosure are included to facilitate understanding and are to be considered as illustrative only. Accordingly, those of ordinary skill in the art recognize that various changes and modifications of the embodiments described herein can be made without departing from the scope of the present disclosure. Also, descriptions of well-known functions and constructions are omitted from the following description for clarity and conciseness.

In the present disclosure, the term "and/or" is intended to cover all possible combinations and sub-combinations of the listed elements, including any one of the listed elements alone, any sub-combination, or all of the elements, and without necessarily excluding additional elements.

In the present disclosure, the phrase "at least one of...or..." is intended to cover any one or more of the listed elements, including any one of the listed elements alone, any sub-combination, or all of the elements, without necessarily excluding any additional elements, and without necessarily requiring all of the elements.

In the present disclosure, the term "coding" refers to "encoding" or to "decoding" as becomes apparent from the context of the described embodiments. Likewise, the term "coder" refers to "an encoder" or to "a decoder".

In the present disclosure, the terms "if", "when", "in case", "responsive to" may be used interchangeably.

### Standard Video Coder

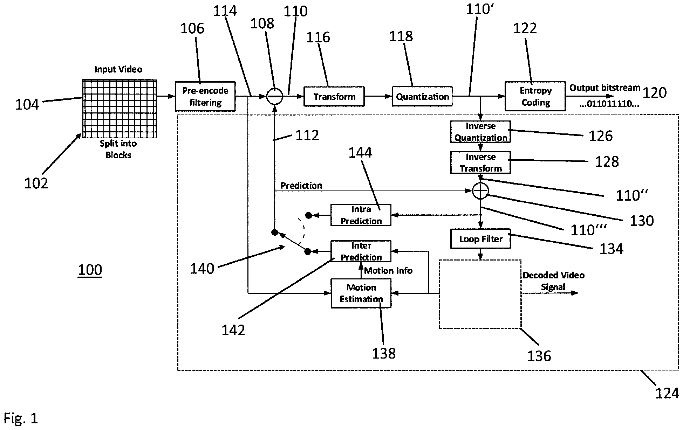

A block diagram of a standard video compression system 100 operating in accordance with the VVC standard is illustrated in Fig. 1. The standard video coder 100 compresses and encodes a picture 102 of a video sequence. The picture 102 to be encoded is partitioned into blocks 104 also referred to as coding units, CUs. The encoder 100 comprises a pre-encode filter 106 and a prediction residual signal former 108 which generates a prediction residual signal 110 so as to measure a deviation of a prediction signal 112 from the signal 114 output by the filter 106. The encoder further comprises a transformer 116, a quantizer 118 and provides an output bitstream or data stream 120 using an entropy coder 122. Further, the encoder 100 comprises a prediction stage 124 for determining the prediction signal 112, which includes a de-quantizer or inverse quantizer 126, an inverse transformer 128, a combiner 130, an in-loop filter 134, a picture buffer 136, a motion estimator 138, an intra/inter mode selector 140, an inter predictor 142 and an intra predictor 144.

The video coder 100 as described with reference to Fig. 1 compresses and encodes a picture 102 of a video sequence as follows. The picture 102 to be encoded is partitioned into the blocks or CUs 104. Each coding unit 104 is encoded using either an intra or inter coding mode. When a CU is encoded in the intra mode, intra prediction is performed by the intra predictor 144. The intra prediction comprises predicting the current CU 114 being encoded by means of already coded, decoded and reconstructed picture samples located around the current CU, e.g., on the top and on the left of the current CU. The intra prediction is performed in the spatial domain. In an inter mode, motion compensation and motion estimation are performed by the motion estimator 138 which searches, in one or more reference pictures provided by the picture buffer 136 and used to predictively code the current picture, a CU that is a good predictor of a current CU. For example, a good predictor of a current CU is a predictor which is similar to the current CU, i.e., the distortion between the two CUs is low or below a certain threshold. The motion estimation may also account for the rate cost of signaling the predictor to optimize a rate-distortion tradeoff. The output of the motion estimation step is one or more motion vectors and reference indices associated with the current CU. The motion compensation then predicts the current CU by means of the one or more motion vectors and reference pictures indices as determined by the motion estimator 138. Basically, the block or CU contained in the selected reference picture and pointed to by the determined motion vector is used as the prediction block for the current CU. The encoder 100, by means of the selector 140, selects one of the intra coding mode or the inter coding mode to use for encoding the CU and indicates the intra/inter decision, for example, by means of a prediction mode flag. Prediction residuals are calculated or determined, for example, by subtracting the predicted block from the original image block. Prediction residuals 110 are then transformed and quantized by blocks 116 and 118, and the quantized transform coefficients as well as the motion vectors and other syntax elements are entropy encoded and written into the output bitstream 120. The encoder 100 may skip the transform stage 116 and apply the quantization directly to the non-transformed residual signal 110 in a so-called transform-skip coding mode. After a block or CU has been encoded, the encoder decodes the CU and reconstructs it so as to obtain the reconstructed signal 110‴ that may serve as a reference data for predicting future CUs or blocks to encode. The quantized transform coefficients 110' are de-quantized and inverse transformed leading to a decoded prediction CU or block 110", and the decoded prediction residuals and the predicted block are then combined at 130, typically summed, so as to provide the reconstructed block or CU 110‴. The in-loop filters 134 are applied to the reconstructed picture to reduce compensation artifacts. For example, a deblocking filter, a sample adaptive offset, SAO, filter, and an adaptive loop filter, ALF, may be applied to reduce encoding artifacts. The filtered picture is stored in the buffer 136, also referred to as the decoded picture buffer, DPB, so that it may be used as a reference picture for coding subsequent pictures.

### Standard Video Decoder

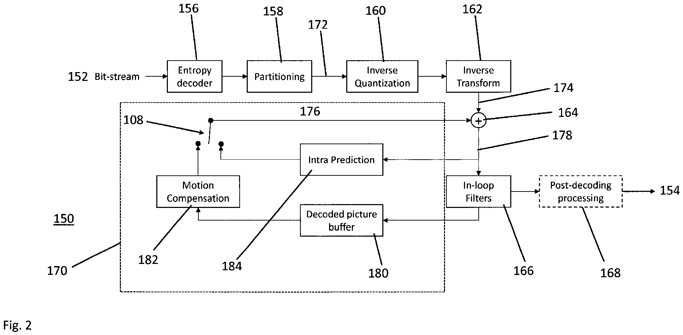

Fig. 2 is a block diagram of a video decoder 150 for predictively decoding from a data or bitstream 152 a picture or video which is provided at an output 154 of the decoder 150. The decoder 150 includes an entropy decoder 156, a partitioning block 158, an inverse quantizer 160, an inverse transformer 162, a combiner 164, an in-loop filter 166, optionally a post-decoding processor 168, and a prediction module 170. The prediction module 170 includes a decoded picture buffer 180 a motion compensator 182 an intra predictor 184.

An encoded picture of a video sequence is decompressed and decoded by the decoder 150 as follows. The input bitstream 152 is entropy decoded by the decoder 156 which provides, for example, the block partitioning information, the coding mode for each coding unit, the transform coefficients contained in each transform block, prediction information, like intra prediction mode, motion vectors, reference picture indices, and other coding information. The block partitioning information indicates how the picture is partitioned and the decoder 150 may divide the input picture into coding tree units, CTUs, typically of a size of 64x64 or 128x128 pixels and divide each CTU into rectangular or square coding units, CUs, according to the decoded partitioning information. The entropy decoded quantized coefficients 172 are de-quantized 160 and inverse transformed 162 so as to obtain the decoded residual picture or CU. 174. The decoded prediction parameters are used to predict the current block or CU, i.e., whether the predicted block is to be obtained through its intra prediction or through its motion-compensated temporal prediction. The prediction process performed at the decoder side is the same as the one performed at the encoder side. The decoded residual blocks 174 are added to the predicted block 176, thereby yielding the reconstructed current image block 178. The in-loop filters 166 are applied to the reconstructed picture or image which is also stored in the decoded picture buffer 180 to serve with the reference picture for future pictures to decode. As mentioned above, the decoded picture may further go through a post-decoding processing, for example for performing an inverse color transformation, for example a conversion from YCbCr 4:2:0 to RGB 4:4:4.

In all above processes, the entropy (de)coding of syntax elements representing encoder decisions such as block partitioning information, prediction modes/parameters, quantized transform coefficients, etc. may be carried out by using a context-adaptive entropy coder, such as Context-Adaptive Binary Arithmetic Coding (CABAC). To use CABAC, each syntax element is first binarized to be represented with a series of bins. Then each bin is associated with a CABAC context model that keeps track of binary values of that particular bin in the past, in order to more efficiently model its probability distribution.

### Description of tools in VVC and Enhanced Compression Model (ECM)

### Transform Skip (TS)

Transform Skip (TS) is a technique used in video coding standards, like HEVC and VVC, to improve compression efficiency by skipping the transform stage for certain prediction modes. In traditional video coding, each block of pixels undergoes a transform operation (e.g. DCT) before quantization and entropy coding. However, in TS mode, the transform stage, like transformer 116 in Fig. 1, is bypassed for specific prediction modes, allowing the encoder to directly quantize the residual signal 110 without transformation. This approach is beneficial for blocks where the residual signal after prediction is small or close to zero, as applying a transform may not yield significant compression gains and can introduce unnecessary computational overhead. By skipping the transform, the encoder can reduce complexity and bitrate overhead associated with the transform stage, leading to improved compression efficiency, especially in scenarios with low residual energy or when the residual signal is already well-predicted by the motion compensation process. However, it's worth noting that the decision to apply TS mode is usually adaptive and depends on the characteristics of the block and the coding context determined by the encoder.

### Multiple transform selection (MTS) for core transform

In addition to DCT-II which has been employed in HEVC, a Multiple Transform Selection (MTS) scheme is used for residual coding both inter and intra coded blocks. It uses multiple selected transforms from the DCT8/DST7. The transform matrices are DST-VII and DCT-VIII. The table below shows the basis functions of the selected DST/DCT.

| Transform Type | Basis function *Tᵢ*(*j*), *i*, *j =* 0, 1,..., *N*-1 |
|---|---|
| DCT-II | ${T}_{i} \left(j\right) = {ω}_{0} ⋅ \sqrt{\frac{2}{N}} ⋅ cos \left(\frac{π ⋅ i ⋅ \left(2j+1\right)}{2 N}\right)$ |
| | ${ω}_{0} = \left\{\begin{matrix}\sqrt{\frac{2}{N}} & i = 0 \\ 1 & i \neq 0\end{matrix}\right.$ where, |
| DCT-VIII | ${T}_{i} \left(j\right) = \sqrt{\frac{4}{2 N + 1}} ⋅ cos \left(\frac{π ⋅ \left(2i+1\right) ⋅ \left(2j+1\right)}{4 N + 2}\right)$ |
| DST-VII | ${T}_{i} \left(j\right) = \sqrt{\frac{4}{2 N + 1}} ⋅ sin \left(\frac{π ⋅ \left(2i+1\right) ⋅ \left(j+1\right)}{2 N + 1}\right)$ |

### Transform basis functions of DCT-II/ VIII and DSTVII for N-point input

In order to keep the orthogonality of the transform matrix, the transform matrices are quantized more accurately than the transform matrices in HEVC. To keep the intermediate values of the transformed coefficients within the 16-bit range, after horizontal and after vertical transform, all the coefficients are to have 10-bit.

In order to control the MTS scheme, separate enabling flags are specified at the Sequence Parameter Set (SPS) level for intra and inter, respectively. When MTS is enabled at SPS, a CU level flag is signaled to indicate whether MTS is applied or not. MTS may be applied only for luma. The MTS signaling is skipped when one of the below conditions is applied.

The position of the last significant coefficient for the luma transform block (TB) is less than 1, i.e., DC only.

The last significant coefficient of the luma TB is located inside the MTS zero-out region.

If an MTS CU flag is equal to zero, then DCT2 is applied in both directions. However, if the MTS CU flag is equal to one, then two other flags are additionally signaled to indicate the transform type for the horizontal and vertical directions, respectively. A transform and signaling mapping table is shown below. A unified transform selection for intra sub-partitions (ISP) and an implicit MTS is used by removing the intra-mode and block-shape dependencies. If a current block is in ISP mode or if the current block is an intra block and both intra and inter explicit MTS is on, then only DST7 is used for both horizontal and vertical transform cores. When it comes to transform matrix precision, 8-bit primary transform cores are used. Therefore, all the transform cores used in HEVC are kept the same, including 4-point DCT-2 and DST-7, 8-point, 16-point and 32-point DCT-2. Also, other transform cores including 64-point DCT-2, 4-point DCT-8, 8-point, 16-point, 32-point DST-7 and DCT-8, use 8-bit primary transform cores.

| MTS_CU_flag | MTS_Hor_flag | MTS_Ver_flag | Intra/inter | |
|---|---|---|---|---|
| | | | Horizontal | Vertical |
| 0 | | | DCT2 | |
| 1 | 0 | 0 | DST7 | DST7 |
| | 0 | 1 | DCT8 | DST7 |
| | 1 | 0 | DST7 | DCT8 |
| | 1 | 1 | DCT8 | DCT8 |

### Transform and signaling mapping table

To reduce the complexity of large size DST-7 and DCT-8 blocks, high frequency transform coefficients are zeroed out for the DST-7 and DCT-8 blocks with a size (width or height, or both width and height) equal to 32. Only the coefficients within the 16x16 lower-frequency region are retained.

As in HEVC, the residual of a block may be coded using a transform skip mode. To avoid a redundancy of syntax coding, the transform skip flag is not signaled when the CU level MTS_CU_flag is not equal to zero. An implicit MTS transform is set to DCT2 when a low-frequency non-separable transform (LFNST) or a matrix-based intra prediction (MIP) is activated for the current CU. Also the implicit MTS may be still enabled when MTS is enable for inter coded blocks.

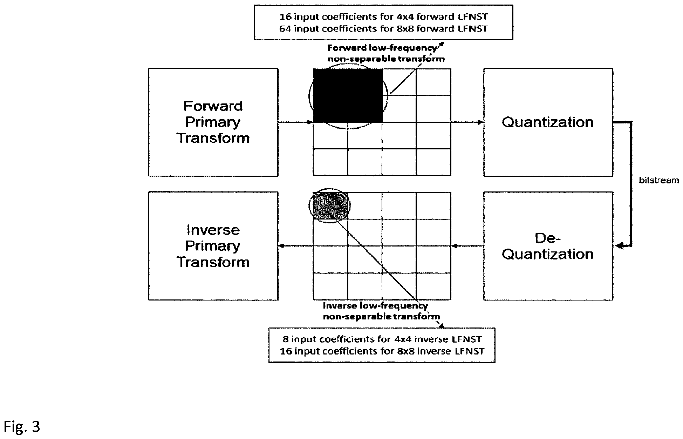

In VVC, LFNST is applied between the forward primary transform and the quantization (at encoder) and between the de-quantization and the inverse primary transform (at decoder side) as shown in Fig. 3. In LFNST, a 4x4 non-separable transform or an 8x8 non-separable transform is applied according to block size. For example, 4x4 LFNST is applied for small blocks (i.e., min(width, height) < 8) and 8x8 LFNST is applied for larger blocks (i.e., min(width, height) > 4).

The application of a non-separable transform, which is being used in LFNST, is as follows:

To apply a 4x4 LFNST, the 4x4 input block X $X = \left[\begin{matrix}{X}_{00} & {X}_{01} & {X}_{02} & {X}_{03} \\ {X}_{10} & {X}_{11} & {X}_{12} & {X}_{13} \\ {X}_{20} & {X}_{21} & {X}_{22} & {X}_{23} \\ {X}_{30} & {X}_{31} & {X}_{32} & {X}_{33}\end{matrix}\right]$ is first represented as a vector ${X}^{⇀}$: ${X}^{⇀} = {\left[{X}_{00} {X}_{01} {X}_{02} {X}_{03} {X}_{10} {X}_{11} {X}_{12} {X}_{13} {X}_{20} {X}_{21} {X}_{22} {X}_{23} {X}_{30} {X}_{31} {X}_{32} {X}_{33}\right]}^{T}$

The non-separable transform is obtained as $F ⃑ = T ⋅ X ⃑$, where ${F}^{⇀}$ indicates the transform coefficient vector, and T is a 16x16 transform matrix. The 16x1 coefficient vector $F ⃑$ is subsequently re-organized as 4x4 block using the scanning order for that block (horizontal, vertical or diagonal). The coefficients with smaller index are placed with the smaller scanning index in the 4x4 coefficient block.

### Joint coding of chroma residuals (JCCR)

VVC supports the joint coding of chroma residual (JCCR) tool where the chroma residuals are coded jointly. The usage (activation) of the JCCR mode is indicated by a TU-level flag *tu_joint_cbcr_residual_flag* and the selected mode is implicitly indicated by the chroma CBFs. The flag *tu_joint_cbcr_residual_flag* is present if either or both chroma CBFs for a TU are equal to 1. In the PPS and slice header, chroma QP offset values are signalled for the JCCR mode to differentiate from the usual chroma QP offset values signalled for regular chroma residual coding mode. These chroma QP offset values are used to derive the chroma QP values for some blocks coded using the JCCR mode. The JCCR mode has 3 sub-modes. When a corresponding JCCR sub-mode (sub-modes 2 in table below) is active in a TU, this chroma QP offset is added to the applied luma-derived chroma QP during quantization and decoding of that TU. For the other JCCR sub-modes (sub-modes 1 and 3 in table below), the chroma QPs are derived in the same way as for conventional Cb or Cr blocks. The reconstruction process of the chroma residuals (resCb and resCr) from the transmitted transform blocks is depicted in Table 3-11. When the JCCR mode is activated, one single joint chroma residual block (resJointC[x][y] in table below) is signalled, and residual block for Cb (resCb) and residual block for Cr (resCr) are derived considering information such as tu_cbf_cb, tu_cbf_cr, and CSign, which is a sign value specified in the slice header.

At the encoder side, the joint chroma components are derived as explained in the following. Depending on the mode (listed in the tables above), resJointC{ 1,2} are generated by the encoder as follows:
- If mode is equal to 2 (single residual with reconstruction Cb = C, Cr = CSign * C), the joint residual is determined according to
   - $resJointC \left[x\right] \left[y\right] = \left(resCb\left[x\right]\left[y\right]+CSign*resCr\left[x\right]\left[y\right]\right) / 2$
- Otherwise, if mode is equal to 1 (single residual with reconstruction Cb = C, Cr = (CSign * C) / 2), the joint residual is determined according to
   - $resJointC \left[x\right] \left[y\right] = \left(4*resCb\left[x\right]\left[y\right]+2*CSign*resCr\left[x\right]\left[y\right]\right) / 5$
- Otherwise (mode is equal to 3, i. e., single residual, reconstruction Cr = C, Cb = (CSign * C) / 2), the joint residual is determined according to
   - $resJointC \left[x\right] \left[y\right] = \left(4*resCr\left[x\right]\left[y\right]+2*CSign*resCb\left[x\right]\left[y\right]\right) / 5$

Table- Reconstruction of chroma residuals. The value CSign is a sign value (+1 or -1), which is specified in the slice header, resJointC[ ][ ] is the transmitted residual.

| tu_cbf_c b | tu_cbf_cr | reconstruction of Cb and Cr residuals | mod e |
|---|---|---|---|
| 1 | 0 | resCb[ x ][ y ] = resJointC[ x ][ y ] | 1 |
| | | resCr[ x ][ y ] = ( CSign * resJointC[ x ][ y ] ) >> 1 | |
| 1 | 1 | resCb[ x ][ y ] = resJointC[ x ][ y ] | 2 |
| | | resCr[ x ][ y ] = CSign * resJointC[ x ][ y ] | |
| 0 | 1 | resCb[ x ][ y ] = ( CSign * resJointC[ x ][ y ] ) >> 1 | 3 |
| | | resCr[ x ][ y ] = resJointC[ x ][ y ] | |

The three joint chroma coding sub-modes described above table are only supported in I slices. In P and B slices, only mode 2 is supported. Hence, in P and B slices, the syntax element *tu_joint_chcr_residual_flag* is only present if both chroma cbfs are 1.

The JCCR mode can be combined with the chroma transform skip (TS) mode. To speed up the encoder decision, the JCCR transform selection depends on whether the independent coding of Cb and Cr components selects the DCT-2 or the TS as the best transform, and whether there are non-zero coefficients in independent chroma coding. Specifically, if one chroma component selects DCT-2 (or TS) and the other component is all zero, or both chroma components select DCT-2 (or TS), then only DCT-2 (or TS) will be considered in JCCR encoding. Otherwise, if one component selects DCT-2 and the other selects TS, then both DCT-2 and TS will be considered in JCCR encoding.

### Decoder side intra mode derivation (DIMD)

When DIMD is applied, up to five intra modes are derived from the reconstructed neighbor samples, and those five predictors are combined with the non-directional predictor (planar or block vector-based predictor) with the weights derived from the histogram of gradients as described in JVET-O0449. The decision between the non-directional modes is taken according to the template cost. Specifically, the block vectors of all adjacent and non-adjacent merge candidates (coded in IntraTMP or IBC) are compared to planar prediction on the reconstructed template. The template cost (SATD) is used to select the best predictor among them.

The division operations in weight derivation are performed utilizing the same lookup table (LUT) based integerization scheme used by the CCLM. For example, the division operation in the orientation calculation $Orient = {G}_{y} / {G}_{x}$ is computed by the following LUT-based scheme: $x = Floor \left(Log2\left(Gx\right)\right)$ $normDiff = \left(\left(Gx≪4\right)≫x\right) & 15$ $x + = \left(3+\left(normDiff !=0\right) ? 1 : 0\right)$ $Orient = \left(Gy*\left(DivSigTable\left[normDiff\right]\left|8\right.\right)+\left(1≪\left(x-1\right)\right)\right) ≫ x$ where $DivSigTable \left[16\right] = \left\{0, 7, 6, 5, 5, 4, 4, 3, 3, 2, 2, 1, 1, 1, 1, 0\right\} .$

For a block of size *W* × *H*, the weight for each of the five derived modes is modified if one of the above or left histogram magnitudes is twice as large as the other one. In this case, the weights are location dependent and computed as follows:

If the above histogram is twice the left, then: ${w}_{i} \left(x, y\right) = {wDimd}_{i} + {Δ}_{i} - 2 {Δ}_{i} \frac{y}{\left(H-1\right)} .$

If the left histogram is twice the above, then: ${w}_{i} \left(x, y\right) = {wDimd}_{i} + {Δ}_{i} - 2 {Δ}_{i} \frac{x}{\left(W-1\right)} ,$ where *wDimdᵢ* is the unmodified uniform weight of the DIMD selected as in JVET-O0449, Δ*ᵢ* is pre-defined and set to 10.

Derived intra modes are included in the primary list of intra most probable modes (MPM), so the DIMD process is performed before the MPM list is constructed. The primary derived intra mode of a DIMD block is stored with a block and is used for MPM list construction of the neighboring blocks.

Finally, note the region of neighboring reconstructed samples used for computing the histogram of gradients is modified compared to JVET-O0449 method, depending on reconstructed samples availability. The region of decoded reference samples of current WxH luma CB is extended towards the above-right side if available, up to W additional columns. It is extended towards the bottom-left side if available, up to H additional rows.

### Fusion for template-based intra mode derivation (TIMD)

For each intra prediction mode in MPMs, as well as the wide-angle modes if the above-right and/or bottom-left reference samples are available, SATD between the prediction and reconstruction samples of the template is calculated. First two intra prediction modes with the minimum SATD and one non-angular intra prediction mode (i.e., DC or Planar) with the lowest SATD cost are selected as the TIMD modes. These three TIMD modes are fused with the weights after applying PDPC process, and such weighted intra prediction is used to code the current CU. Position dependent intra prediction combination (PDPC) is included in the derivation of the TIMD modes.

The conditions below are checked to determine whether the non-angular intra prediction mode is used in fusion:
- the non-angular intra prediction mode is different from the two selected intra prediction modes.
- costMode3 < 1.5*costModel, where the costMode3 is the SATD cost of the non-angular intra prediction mode and costMode1 is the SATD cost of the first intra prediction mode.

If both of the conditions are true, three intra prediction modes are used to generate the prediction. And the weights of each intra prediction mode are computed from SATD cost: ${weight}_{i} = \frac{sumSATD - {costMode}_{i}}{2 \times sumSATD} , sumSATD = {\sum }_{j = 1}^{3} {costMode}_{i} .$

Otherwise, the non-angular intra prediction mode is not used in prediction. And the costs of the two selected modes are compared with a threshold, in the test the cost factor of 2 is applied as follows: $costMode 2 < 2 * costMode 1 .$

If this condition is true, the fusion is applied, otherwise only mode1 is used.

Weights of the modes are computed from their SATD costs as follows: $weight 1 = costMode 2 / \left(costMode1+costMode2\right)$ $weight 2 = 1 - weight 1$

The division operations are conducted using the same lookup table (LUT) based integerization scheme used by the CCLM.

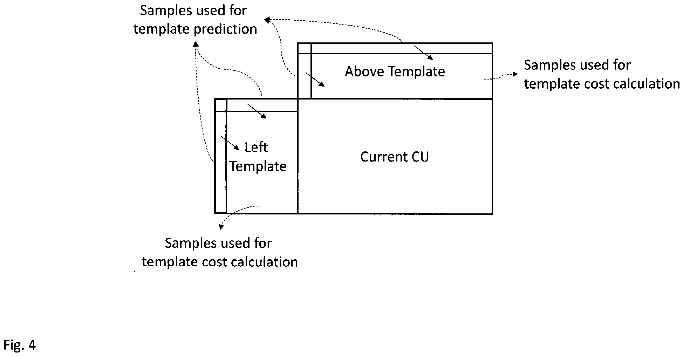

Besides, location-dependent sample-based fusion used in DIMD fusion process is used for the TIMD fusion but the location-dependent criterion applying to amplitudes of the selected predictors is replaced by a SATD cost-based criteria. The location-dependent criterion is determined from a ratio of the normalized SATD of the selected TIMD predictors computed in above and left template area shown in Fig. 4 illustrating the TIMD templates for the cost determination or calculation.

As described above, certain coding modes may not be useful for a block in terms of coding efficiency and/or complexity, when the block exhibits certain spatial characteristics. For example, using certain transform coding types (such as LFNST) or certain prediction methods (such as DIMD/TIMD) may not be useful when the samples characteristics of the block is very simple.

Embodiments of this disclosure propose to configure certain coding tools to be activated or deactivated for a block based on spatial information of that block.

The encoder and decoder designs shown in Fig. 1 and 2 may be used to build the subsequently proposed embodiments thereinto.

### Availability of transform coefficients

Video coding standards indicate whether a transform block contains nonzero transform coefficients using certain information. For example, in VVC, this is done by CBF flag.
- The CBF helps in signaling whether a block has residual data after transformation and quantization.
- If the CBF is 0, it means the block has no residual coefficients, and it can be skipped.
- If the CBF is 1, it means the block has nonzero residual coefficients, which need to be further processed.
- It is encoded separately for luma (Y) and chroma (Cb, Cr) components.

### Detailed technical description of the proposed disclosure

The proposed methods in the invention use certain spatial information for implicitly activating or deactivating or configuring one or more coding tools for a block or group of blocks.

The term "spatial information" in this invention refers to information that can be available or determined when parsing the syntax elements of block(s). Examples of such spatial information are:
- Transform information of neighbor blocks such as LFNST, NSPT, MTS and TS
- Availability of non-zero transform coefficients in neighbor blocks
- Position of last significant transform coefficient of neighboring blocks

One or more of such spatial information may be used for implicitly activating or deactivating certain coding tools in the codec. The activation or deactivation of coding tools may result in:
- When activated, the encoder may use the coding tool (e.g., as part of group of coding tools) for encoding a block.
- When activated, the decoder decodes the selection information for the coding tool for that block.
- When deactivated, the encoder doesn't use the coding tool for coding a block. In addition, the selection information for the mode may not be signaled in the bitstream.
- When deactivated, the decoder doesn't decode the selection information and sets the coding tool as not selected or false for that block.

The said spatial information is used as measures for determining the complexity of the texture in a certain area of the block without actually using the reconstructed samples in that area. For example, if one or more of the spatial neighboring blocks are coded using transform skip (TS) mode, it may indicate that the corresponding area of the frame contains simple texture characteristics and may be predicted easily. In another example, if one or more of the spatial neighboring blocks contains only zero Cbfs (i.e., no transform coefficients coded for that block) it may indicate similar simple texture characteristics in that neighborhood.

The coding tool that is activated or deactivated using the spatial information may be one or more of the following, or any other coding tool in the underlying codec:
- One or more of intra prediction tools such as DIMD, TIMD, SGPM, etc.
- One or more of inter prediction tools such as affine, DMVR, GPM, etc.
- One or more of transform coding tools such as LFNST, MTS, TS, SBT, JCCR, etc.
- One or more of in-loop filters such as SAO, ALF, DBF, etc.

In the following, some examples are provided when the said spatial information is used for deactivating certain coding tools.

### Prediction mode activation

In one scenario, some of the intra prediction modes may be enabled or disabled based on the spatial information of the block.

For example, some intra prediction tools such as DIMD and TIMD are designed in such a way that they perform efficient prediction on complex textures such as camera captured content by blending multiple predictions. However, such tools do not have similar prediction efficiency in simple textures such as screen content.

According to methods of the invention, such intra prediction tools may be deactivated implicitly when one or more of the neighbor blocks are coded in transform skip coding method or contain certain number of zero Cbfs. To determine this, one or more blocks in top of the current block and/or one or more blocks in the left side of the current block may be checked. If either or both of the neighbor blocks are coded in transform skip mode, or one or more of the neighbor blocks have zero-Cbf, then the said intra prediction modes (DIMD and TIMD) may be deactivated for that block.

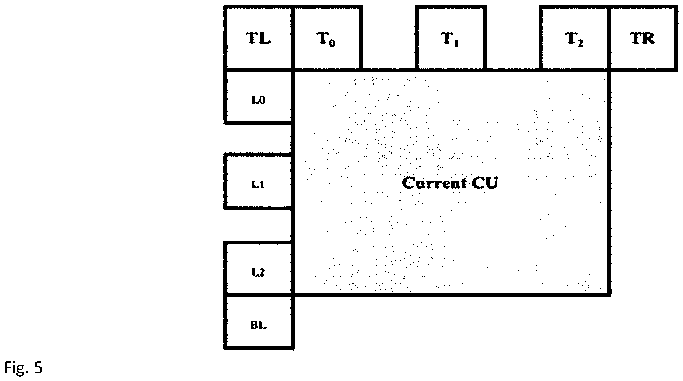

Fig. 5 shows some example locations that are scanned for determining the TS-coded and/or zero-Cbf availability in neighboring blocks of the current block. In this example, the following spatial positions are scanned:
TL: (blkPosX - 1, blkPosY - 1)
TR: (blkPosX + blkWidth + 1, curBlkPosY - 1)
BL: (blkPosX - 1, blkPosY + blkHeight + 1)
T₀: (blkPosX, blkPosY - 1)
T₁: (blkPosX + (blkWidth/ 2) - 1, curBlkPosY - 1)
T₂: (blkPosX + blkWidth, blkPosY - 1)
L₀: (blkPosX - 1, blkPosY)
L₁: (blkPosX - 1, blkPosY + (blkHeight / 2) - 1)
L₂: (blkPosX - 1, blkPosY + blkHeight)
where (blkPosX, blkPosY) refer to top-left corner position of the current block with respect to the top-left corner position of the frame. Moreover, blkWidth and blkHeight refer to the width and height of the current block, respectively.

In an example, either or both DIMD and TIMD modes may be deactivated for a block if L₀ and T₀ neighboring blocks are coded in TS mode or have zero-Cbf.

Below tables show example specification process for deactivating DIMD and TIMD modes when both L₀ and T₀ neighboring blocks are coded in TS mode.

| | |
|---|---|
| | *Descriptor* |
| *if (transform_skip_flag[ x0 - 1 ][ y0 ][ cIdx ] && transform_skip_flag[ x0 ][y0 - 1 ][ cIdx ]) {* | |
| *dimd_flag[x0][y0][ cIdx ]= false* | |
| *} else {* | |
| *dimd_flag[x0][y0][ cIdx ]* | *ae(v)* |

| | |
|---|---|
| | *Descriptor* |
| *if (transform_skip_flag[ x0- 1 ][ y0 ][ cIdx ] && transform_skip_flag[ x0 ][ y0 - 1 ][cIdx ]) {* | |
| *timd_flag[x0][y0][ cIdx ]= false* | |
| *} else {* | |
| *timd_flag[x0][y0][ cIdx ]* | *ae(v)* |

### Transform mode activation

In another scenario, some of the transform coding modes may be enabled or disabled based on the spatial information of the block.

For example, some transforms such as LFNST and NSPT are typically more useful when the texture of the block is difficult to predict, thus, the secondary transform applied using LFNST could help in more efficient compression for the block. When the block characteristics are simple enough to be compressed with simpler coding tools, the usage of LFNST-like transforms may not be necessary. In such cases, using LFNST may increase the encoder complexity as well as extra bitrate overhead caused by signaling the LFNST flag information in the bitstream.

In some examples of the methods of the invention, such transform coding tools may be deactivated implicitly when one or more of the neighbor blocks are coded in transform skip method or contain zero-Cbf. To determine this, one or more blocks in top of the current block and/or one or more blocks in the left side of the current block may be scanned. If either or both of the neighbor blocks are coded in transform skip mode, or one or more of the scanned neighbor blocks has zero-Cbf, then the LFNST-like transform coding tools may be deactivated for that block.

In another example, when the said spatial information somehow indicate that the local characteristics of the block are difficult to compress, the usage of simple transform coding tools may be deactivated for that block. For example, if one or more of the neighboring blocks are coded in LFNST-like transform coding tools, then the usage of transform skip (TS) coding may be deactivated for that block.

Below table show one example specification process for deactivating LFNST mode for the current block when both L₀ and T₀ neighboring blocks are coded in TS mode.

| | |
|---|---|
| | *Descriptor* |
| *if (transform_skip_flag[ x0 - 1 ][ y0 ][ cIdx ] && transform_skip_flag[ x0 ][y0 - 1 ][ cIdx ]) {* | |
| *lfnst_idx[x0][y0][ cIdx ]= 0* | |
| *} else {* | |
| *lfnst_idx[x0][y0][ cIdx ]* | *ae(v)* |

Below table show another example specification process for deactivating TS mode for the current block when both L₀ and T₀ neighboring blocks are coded in LFNST mode.

| | |
|---|---|
| | *Descriptor* |
| *if (lfnst*_*idx[ x0 - 1 ][ y0 ][ cIdx ]* > *0 && lfnst_idx[ x0 ][y0 - 1 cIdx > 0) {* | |
| *transform_skip_flag[ x0 ][ y0 - 1 ][ cIdx ] = false* | |
| *} else {* | |
| *transform_skip_flag[ x0 ][ y0 - 1 ][ cIdx ]* | *ae(v)* |

### Cross-channel tool configurations

In one method of the invention, the spatial information may refer to information from the co-located block area in a different channel. For example, when coding a chroma block, the spatial information may refer to the information from the co-located luma area. The co-located luma area may use the same partitioning tree as chroma (for example in single-tree coding mechanism) or it may have a different partitioning structure than chroma (for example in dual-tree coding mechanism).

In one example, the usage of JCCR (joint coding of chroma residuals) tool may be activated or deactivated according to the spatial information from the co-located luma area. For instance, if the co-located luma block is coded using TS tool and/or it contains zero-Cbf, then the usage of JCCR method could be:
- Option 1: Disabled for the current chroma block.
- Option 2: Enabled but a subset of JCCR modes may be used instead of all set of JCCR modes.

In another example, the usage of cross-component tools may be activated or deactivated based on spatial information from co-located area in another channel. For instance, one or more of cross-component prediction or one or more of cross-component loop filtering tools may be activated or deactivated for a block.

### Context coding configuration

The context coding process of coding tools may be configured differently based on the said spatial information.

For example, when one or more of the neighboring blocks are coded using TS mode or one or more of the neighboring blocks contain zero-Cbf, the context coding process of one or more of coding tools for the current block may be configured differently.

The change according to the new configuration may be:
- Use a different context derivation for the mode's information.
- Use a different binarization for the mode's information.
- Use a different coding mechanism for the mode's information.
- The order of signaling of one or more of CU-level information may be changed.

In one embodiment, one or more of coding tools may be activated or deactivated for a block or group of blocks based on one or more spatial information of the block or group of blocks.

According to previous embodiment, the said spatial information refers to coding information that are available or can be determined during the syntax elements parsing of the block. Examples of such information are transform coding types, prediction types, zero or non-zero Cbf of neighboring blocks.

According to an embodiment, the said spatial information may be obtained from one or more adjacent or non-adjacent neighboring blocks.

According to an embodiment, the said spatial information may be obtained from one or more of co-located blocks in a different channel.

According to an embodiment, the said spatial information may be obtained from one or more of co-located blocks in a different frame. For example, when inter prediction uses TMVP motion information, some coding tools (LFNST, TS, etc.) for the current block may be activated or deactivated based on the spatial information from the co-located block in the reference frame.

In one embodiment, the said spatial information may be used for configuring the context coding of the block.

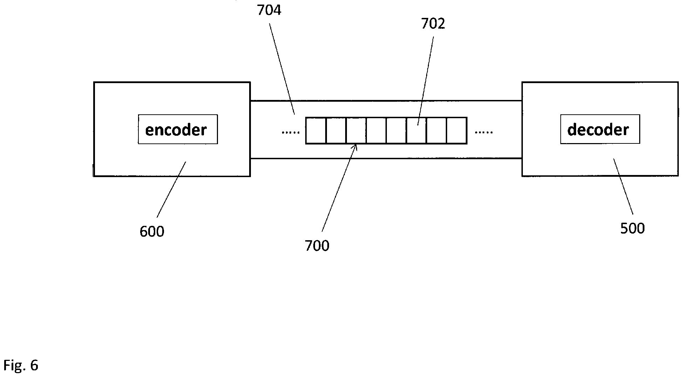

Fig. 6 illustrates a data stream 700 in accordance with embodiments of the present disclosure, which has encoded there into a picture and information data associated with the picture. For example, the data stream or bitstream 700 may be provided by an encoder 600 that performs the inventive method when encoding the picture into the data stream 700. The data stream 700 is transmitted to a decoder 500 via a wired or wireless transmission medium 702, like cable or a radio link, and the decoder 500 decodes from the data stream 700 the picture. The data stream includes a signaling 704 indicating, for a prediction of a block of the picture using a fusion-based prediction process, whether or not the fusion-based prediction process uses a single prediction for the block.

Although some aspects of the disclosed concept have been described in the context of an apparatus, it is clear that these aspects also represent a description of the corresponding method, where a block or a device corresponds to a method step or a feature of a method step. Analogously, aspects described in the context of a method step also represent a description of a corresponding block or item or feature of a corresponding apparatus.

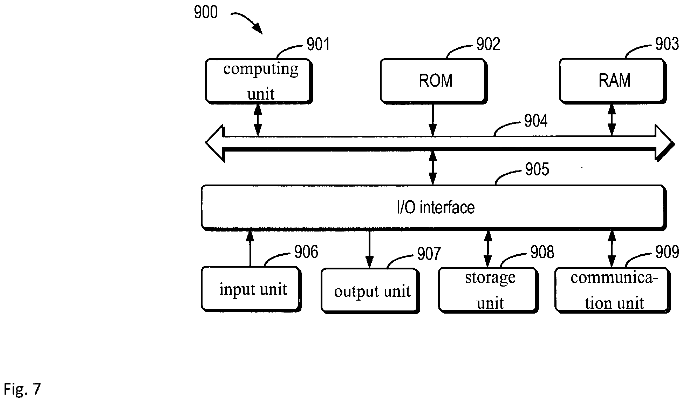

Fig. 7 is a block diagram illustrating an electronic device 900 according to embodiments of the present disclosure. The electronic device is intended to represent various forms of digital computers, such as a laptop, a desktop, a workstation, a personal digital assistant, a server, a blade server, a mainframe computer, and other suitable computers. The electronic device may also represent various forms of mobile devices, such as a personal digital processor, a cellular phone, a smart phone, a wearable device, and other similar computing devices. The components shown herein, their connections and relationships, and their functions are described as examples only, and are not intended to limit implementations of the present disclosure described and/or claimed herein. The device 900 includes a computing unit 901 to perform various appropriate actions and processes according to computer program instructions stored in a read only memory (ROM) 902, or loaded from a storage unit 908 into a random access memory (RAM) 903. In the RAM 903, various programs and data for the operation of the storage device 900 can also be stored. The computing unit 901, the ROM 902, and the RAM 903 are connected to each other through a bus 904. An input/output (I/O) interface 905 is also connected to the bus 904.

Components in the device 900 are connected to the I/O interface 905, including: an input unit 906, such as a keyboard, a mouse; an output unit 907, such as various types of displays, speakers; a storage unit 908, such as a disk, an optical disk; and a communication unit 909, such as network cards, modems, wireless communication transceivers, and the like. The communication unit 909 allows the device 900 to exchange information/data with other devices through a computer network such as the Internet and/or various telecommunication networks. The computing unit 901 may be formed of various general-purpose and/or special-purpose processing components with processing and computing capabilities. Some examples of the computing unit 901 include, but are not limited to, a central processing unit (CPU), graphics processing unit (GPU), various specialized artificial intelligence (AI) computing chips, various computing units that run machine learning model algorithms, digital signal processor (DSP), and any suitable processor, controller, microcontroller, etc. The computing unit 901 performs various methods and processes described above, such as an image processing method. For example, in some embodiments, the image processing method may be implemented as computer software programs that are tangibly embodied on a machine-readable medium, such as the storage unit 908. In some embodiments, part or all of the computer program may be loaded and/or installed on the device 900 via the ROM 902 and/or the communication unit 909. When a computer program is loaded into the RAM 903 and executed by the computing unit 901, one or more steps of the image processing method described above may be performed. In some embodiments, the computing unit 901 may be configured to perform the image processing method in any other suitable manner (e.g., by means of firmware).

Although some aspects of the disclosed concept have been described in the context of an apparatus, it is clear that these aspects also represent a description of the corresponding method, where a block or a device corresponds to a method step or a feature of a method step. Analogously, aspects described in the context of a method step also represent a description of a corresponding block or item or feature of a corresponding apparatus.

Various implementations of the systems and techniques described herein above may be implemented in digital electronic circuitry, integrated circuit systems, field programmable gate arrays (FPGA), application specific integrated circuits (ASIC), application specific standard products (ASSP), system-on-chip (SOC), complex programmable logic device (CPLD), computer hardware, firmware, software, and/or combinations thereof. These various embodiments may include being implemented in one or more computer programs executable and/or interpretable on a programmable system including at least one programmable processor, and the programmable processor may be a special-purpose or general-purpose programmable processor, and may receive data and instructions from a storage system, at least one input device and at least one output device, and may transmit data and instructions to the storage system, the at least one input device, and the at least one output device.

Program code for implementing the methods of the present disclosure may be written in any combination of one or more programming languages. These program codes may be provided to a processor or controller of a general computer, a dedicated computer, or other programmable data processing device, such that the program codes, when executed by the processor or controller, cause the functions and/or operations specified in the flow diagrams and/or block diagrams is performed. The program code can be executed entirely on the machine, partly on the machine, as a stand-alone software package partly on a machine and partly on a remote machine or entirely on a remote machine or server.

In the context of the present disclosure, a machine-readable medium may be a tangible medium that may contain or store a program for use by or in connection with an instruction execution system, apparatus, or device. The machine-readable medium may be a machine-readable signal medium or a machine-readable storage medium. A machine-readable medium may include, but is not limited to, an electronic, magnetic, optical, electromagnetic, infrared, or semiconductor system, apparatus, or device, or any suitable combination of the foregoing. More specific examples of machine-readable storage media include electrical connections based on one or more wires, portable computer disks, hard disks, random access memories (RAM), read-only memories (ROM), erasable programmable read-only memories (EPROM or flash memory), fiber optics, compact disc read-only memories (CD-ROM), optical storage devices, magnetic storage devices, or any suitable combination of the foregoing.

To provide interaction with a user, the systems and techniques described herein may be implemented on a computer having a display device (e.g., a cathode ray tube (CRT) or liquid crystal display (LCD)) for displaying information for the user; and a keyboard and pointing device (e.g., a mouse or trackball) through which a user can provide an input to the computer. Other types of devices can also be used to provide interaction with the user, for example, the feedback provided to the user may be any form of sensory feedback (e.g., visual feedback, auditory feedback, or tactile feedback); and may be in any form (including acoustic input, voice input, or tactile input) to receive the input from the user.

The systems and techniques described herein may be implemented on a computing system that includes back-end components (e.g., as a data server), or a computing system that includes middleware components (e.g., an application server), or a computing system that includes front-end components (e.g., a user computer with a graphical user interface or web browser through which a user can interact with implementations of the systems and techniques described herein), or a computer system including such a backend components, middleware components, front-end components or any combination thereof. The components of the system may be interconnected by any form or medium of digital data communication (e.g., a communication network). Examples of the communication network includes: Local Area Networks (LAN), Wide Area Networks (WAN), the Internet and blockchain networks.

The computer system may include a client and a server. The Client and server are generally remote from each other and usually interact through a communication network. The relationship of the client and the server is generated by computer programs running on the respective computers and having a client-server relationship with each other. The server may be a cloud server, also known as a cloud computing server or a cloud host, which is a host product in the cloud computing service system, and solves the defects of difficult management and weak business expansion in traditional physical hosts and virtual private servers ("VPS" for short). The server may also be a server of a distributed system, or a server combined with a blockchain.

It is to be understood that the steps may be reordered, added or deleted by using the various forms of flows shown above. For example, the steps described in the present disclosure may be executed in parallel, sequentially, or in different orders, as long as the desired results of the technical solutions in the present disclosure can be achieved, and no limitation is imposed herein.

Summarizing the above, the following embodiments are derivable from above description.

A 1^{st} embodiment provides a method of block-wise decoding a picture from a data stream, the method comprising:
decoding a currently decoded block of the picture
using a selected coding option out of an activated set of one or more coding options which is configured for the currently decoded block based on spatial information of the currently decoded block, or
using a selected coding option responsive to the selected coding option being selected by a mode selection syntax element, wherein the mode selection syntax element is context-adaptively decoded from the data stream using a context selected based on the spatial information of the currently decoded block.

A 2^{nd} embodiment provides the method of the 1^{st} embodiment, wherein the method comprises block-wise predicting the picture to obtain a predictor for blocks of the picture, and transform-decoding a prediction residual for the blocks.

A 3^{rd} embodiment provides the method of the 1^{st} or 2^{nd} embodiment, wherein the spatial information is gained from a portion of the data stream having a previously decoded portion of the picture coded thereinto.

A 4^{th} embodiment provides the method of the 1^{st} or 2^{nd} embodiment, wherein the spatial information is gained from a one or more syntax elements of the data stream which relate to one or more previously decoded blocks of the picture.

A 5^{th} embodiment provides the method of the 1^{st} or 2^{nd} embodiment, wherein the spatial information relates to prediction residual information on one or more previously decoded blocks of the picture, neighboring or overlapping the currently decoded block.

A 6^{th} embodiment provides the method of the 1^{st} or 2^{nd} embodiment, wherein the spatial information relates to one or more of
whether a previously decoded block of the picture, neighboring or overlapping the currently decoded block, is coded using a set of one or more prediction residual coding options, consisting of one or more out of
a usage of a LFNST (low-frequency non-separable transform) applied onto a primary transform as a transform domain for a prediction residual of the previously decoded block,
a usage of MTS (multiple transform selection) for selecting a transform domain for the prediction residual of the previously decoded block,
a usage of TS (transform skip) for the prediction residual of the previously decoded block,
whether the previously decoded block of the picture, neighboring or overlapping the currently decoded block, has any non-zero transform coefficient representing the prediction residual of the previously decoded block,
a position of a last significant transform coefficient of a transform representing the prediction residual of a previously decoded block of the picture, neighboring or overlapping the currently decoded block, which is lastly traversed and significant when traversing the traversing transform coefficients of the transform along a coding path starting from a transform coefficient position which is inevitably coded if the previously decoded block has at least one non-zero transform coefficient.

A 7^{th} embodiment provides the method of the 1^{st} or 2^{nd} embodiment, wherein the spatial information relates to
a count of previously decoded blocks of the picture within a set of previously decoded blocks of the picture, neighboring or overlapping the currently decoded block, which are coded using a set of one or more prediction residual coding options, consisting of one or more out of
a usage of a LFNST (low-frequency non-separable transform) applied onto a primary transform as a transform domain for a prediction residual of the previously decoded block,
a usage of MTS (multiple transform selection) for selecting a transform domain for the prediction residual of the previously decoded block,
a usage of TS (transform skip) for the prediction residual of the previously decoded block,
a count of previously decoded blocks of the picture, within a set of previously decoded blocks of the picture, neighboring or overlapping the currently decoded block, which have any non-zero transform coefficient representing the prediction residual of the previously decoded block, a statistical measure of statistics of a position of a last significant transform coefficient of a transform representing the prediction residual of a set of previously decoded blocks of the picture, neighboring or overlapping the currently decoded block, being lastly traversed and significant when traversing the traversing transform coefficients of the transform along a coding path starting from a transform coefficient position which is inevitably coded if the previously decoded block has at least one non-zero transform coefficient.

An 8^{th} embodiment provides the method of the 1^{st} or 2^{nd} embodiment, wherein the spatial information relates to
all of a set of previously decoded blocks of the picture, neighboring or overlapping the currently decoded block, are coded using a set of one or more prediction residual coding options, consisting of one or more out of
a usage of a LFNST (low-frequency non-separable transform) applied onto a primary transform as a transform domain for a prediction residual of the previously decoded block,
a usage of MTS (multiple transform selection) for selecting a transform domain for the prediction residual of the previously decoded block,
a usage of TS (transform skip) for the prediction residual of the previously decoded block,
all of a set of previously decoded blocks of the picture, neighboring or overlapping the currently decoded block, which have any non-zero transform coefficient representing the prediction residual of the previously decoded block.

A 9^{th} embodiment provides the method of the 7^{th} or 8^{th} embodiment, wherein one or more blocks of the picture which contain predefined samples, having a predefined location relative to the currently decoded block, are appointed the set of previously decoded blocks of the picture.

A 10^{th} embodiment provides the method of any of 1^{st} to 6^{th} embodiment, wherein the one or more coding options of the activated set mutually differ in
coding tool, or
one or more coding parameters of a parametrizable coding tool.

An 11^{th} embodiment provides the method of any of the 1^{st} to 6^{th} embodiment, wherein the activated set of one or more coding options is configured for the currently decoded block based on the spatial information of the block by, for each of a set of coding tools, activating or deactivating the respective coding tool based on the spatial information to obtain an activated set of one or more coding tools, and the method comprises decoding the currently decoded block of the picture using a selected coding tool out of the activated set of one or more coding tools.

A 12^{th} embodiment provides the method of the 11^{th} embodiment, wherein the activated set of one or more coding tools is configured for the currently decoded block such that the activated set of one or more coding tools merely consists of one coding tool which is the selected coding tool.

A 13^{th} embodiment provides the method of the 11^{th} embodiment, comprising
decoding a number n of mode selection syntax elements, with n ≥ 0, and/or
one or more mode m-ary selection syntax elements, with m > 0,
from the data stream, and
selecting the selected coding mode out of the activated set of one or more coding tools, wherein n or m is set depending on the spatial information.

A 14^{th} embodiment provides he method of the 11^{th} embodiment, wherein the method comprises, depending on a predetermined coding tool out of the set of one or more coding tools, being deactivated or activated based on the spatial information,
inferring that a predetermined mode selection syntax element specifically associated with the predetermined coding tool, has a state deselecting the predetermined coding tool, or
decoding the predetermined mode selection syntax element from the data stream and appointing the predetermined coding tool the selected coding tool depending on the predetermined mode selection syntax element.

A 15^{th} embodiment provides the method of any of the 11^{th} to 14^{th} embodiment, wherein the set of coding tools comprises one or more of
one or more intra prediction tools such as DIMD (Decoder Side Intra Mode Derivation), TIMD (Template-Based Intra Mode Derivation), SGPM (Spatial Geometric Partitioning Mode),
one or more inter prediction tools such as affine, DMVR (Decoder-side Affine Model Refinement), GPM (Geometric Partitioning Mode),
one or more transform coding tools such as LFNST (Low-Frequency Non-Separable Transform), MTS (Multiple transform selection), TS (Transform Skip), SBT (Subblock Transform), JCCR (Joint Coding of Chroma Residuals),
one or more in-loop filters.

A 16th embodiment provides the method of any of the 1^{st} to 15^{th} embodiment, wherein the activated set of one or more coding options is configured for the currently decoded block such that the activated set of one or more coding options excludes a DIMD tool, and a predetermined mode selection syntax element which is for selecting whether the DIMD tool is to be used for decoding the currently decoded block, and is otherwise decoded from data stream, is inferred to have a state deselecting the DIMD tool,
and/or
the activated set of one or more coding options is configured for the currently decoded block such that the activated set of one or more coding options excludes a TIMD tool, and a predetermined mode selection syntax element which is for selecting whether the TIMD tool is to be used for decoding the currently decoded block, and is otherwise decoded from data stream, is inferred to have a state deselecting the TIMD tool,
responsive to
all of a set of previously decoded blocks of the picture, neighboring the currently decoded block, or a more than a predetermined number of previously decoded blocks in said set, being coded using a TS tool and/or
all of a set of previously decoded blocks of the picture, neighboring the currently decoded block, or a more than a predetermined number of previously decoded blocks in said set, being signalled to have a zero prediction residual by way of a corresponding flag in the data stream.

A 17th embodiment provides the method of any of the 1^{st} to 16^{th} embodiment, wherein the activated set of one or more coding options is configured for the currently decoded block such that the activated set of one or more coding options excludes a LFNST tool, and a predetermined mode selection syntax element which is for selecting whether the LFNST tool is to be used for decoding the currently decoded block, and is otherwise decoded from data stream, is inferred to have a state deselecting the LFNST tool,
responsive to
all of a set of previously decoded blocks of the picture, neighboring the currently decoded block, or a more than a predetermined number of previously decoded blocks in said set, being coded using a TS tool and/or
all of a set of previously decoded blocks of the picture, neighboring the currently decoded block, or a more than a predetermined number of previously decoded blocks in said set, being signalled to have a zero prediction residual by way of a corresponding flag in the data stream.

An 18th embodiment provides the method of any of the 1^{st} to 17^{th} embodiment, wherein the activated set of one or more coding options is configured for the currently decoded block such that the activated set of one or more coding options excludes a TS tool, and a predetermined mode selection syntax element which is for selecting whether the TS tool is to be used for decoding the currently decoded block, and is otherwise decoded from data stream, is inferred to have a state deselecting the TS tool,
responsive to
all of a set of previously decoded blocks of the picture, neighboring the currently decoded block, or a more than a predetermined number of previously decoded blocks in said set, being coded using a LFNST tool.

A 19th embodiment provides the method of any of the 1^{st} to 18^{th} embodiment, wherein the currently decoded block is a chroma block, and
the activated set of one or more coding options is configured for the currently decoded block such that the activated set of one or more coding options excludes a JCCR (joint coding of chroma residuals) mode, and a predetermined mode selection syntax element which is for selecting whether the JCCR tool is to be used for decoding the currently decoded block, and is otherwise decoded from data stream, is inferred to have a state deselecting the JCCR tool,
responsive to
a previously decoded co-located luma block of the picture, overlapping the currently decoded block, being coded using a TS tool, and/or
a previously decoded co-located luma block of the picture, overlapping the currently decoded block, being signalled to have a zero prediction residual by way of a corresponding flag in the data stream.

A 20th embodiment provides the method of any of the 1^{st} to 19^{th} embodiment, comprising
based on the spatial information of the block, selecting a selected context out of a set of available contexts for the mode selection syntax element,
context-adaptively arithmetically decoding the mode selection syntax element using a probability estimate of the selected context,
adapting the probability estimate of the selected context based on the mode selection syntax element,
decoding the currently decoded block, depending the mode selection syntax element, using or non-using the selected coding option.

A 21^{st} embodiment provides the method of any of the 1^{st} to 20^{th} embodiment, wherein the selected coding tools option comprises one or more of
one or more intra prediction tools such as DIMD, TIMD, SGPM,
one or more inter prediction tools such as affine, DMVR, GPM,
one or more transform coding tools such as LFNST, MTS, TS, SBT, JCCR,
one or more in-loop filters.

A 22^{nd} embodiment provides the method of any of the 1^{st} to 21^{st} embodiment, wherein the selected coding option involves a TIMD tool and/or DIMD tool.

A 23^{rd} embodiment provides the method of any of the 1^{st} to 22^{nd} embodiment, wherein a first context is selected as the context for context-adaptively decoding the mode syntax element when
all of a set of previously decoded blocks of the picture, neighboring the currently decoded block, or a more than a predetermined number of previously decoded blocks in said set, being coded using a TS tool and/or
all of a set of previously decoded blocks of the picture, neighboring the currently decoded block, or a more than a predetermined number of previously decoded blocks in said set, being signalled to have a zero prediction residual by way of a corresponding flag in the data stream, and
a second context is selected as the context for context-adaptively decoding the mode syntax element when
not all of a set of previously decoded blocks of the picture, neighboring the currently decoded block, or a more than a predetermined number of previously decoded blocks in said set, being coded using a TS tool and/or
not all of a set of previously decoded blocks of the picture, neighboring the currently decoded block, or a more than a predetermined number of previously decoded blocks in said set, being signalled to have a zero prediction residual by way of a corresponding flag in the data stream.

A 24^{th} embodiment provides the method of any of the 1^{st} to 23^{rd} embodiment, wherein the selected coding option involves a LFNST tool.

A 25^{th} embodiment provides the method of any of the 1^{st} to 24^{th} embodiment, wherein a first context is selected as the context for context-adaptively decoding the mode syntax element when
all of a set of previously decoded blocks of the picture, neighboring the currently decoded block, or a more than a predetermined number of previously decoded blocks in said set, being coded using a TS tool and/or
all of a set of previously decoded blocks of the picture, neighboring the currently decoded block, or a more than a predetermined number of previously decoded blocks in said set, being signalled to have a zero prediction residual by way of a corresponding flag in the data stream, and
a second context is selected as the context for context-adaptively decoding the mode syntax element when
not all of a set of previously decoded blocks of the picture, neighboring the currently decoded block, or a more than a predetermined number of previously decoded blocks in said set, being coded using a TS tool and/or
not all of a set of previously decoded blocks of the picture, neighboring the currently decoded block, or a more than a predetermined number of previously decoded blocks in said set, being signalled to have a zero prediction residual by way of a corresponding flag in the data stream.

A 26^{th} embodiment provides the method of any of the 1^{st} to 25^{th} embodiment, wherein the selected coding option involves a TS tool.

A 27^{th} embodiment provides the method of any of the 1^{st} to 26^{th} embodiment, wherein a first context is selected as the context for context-adaptively decoding the mode syntax element when
all of a set of previously decoded blocks of the picture, neighboring the currently decoded block, or a more than a predetermined number of previously decoded blocks in said set, being coded using a LFNST tool,
a second context is selected as the context for context-adaptively decoding the mode syntax element when
not all of a set of previously decoded blocks of the picture, neighboring the currently decoded block, or a more than a predetermined number of previously decoded blocks in said set, being coded using a LFNST tool.

A 28^{th} embodiment provides the method of any of the 1^{st} to 27^{th} embodiment, wherein the selected coding option involves a JCCR tool.

A 29^{th} embodiment provides the method of any of the 1^{st} to 28^{th} embodiment, wherein a first context is selected as the context for context-adaptively decoding the mode syntax element when
a previously decoded co-located luma block of the picture, overlapping the currently decoded block, being coded using a TS tool, and/or
a previously decoded co-located luma block of the picture, overlapping the currently decoded block, being signalled to have a zero prediction residual by way of a corresponding flag in the data stream,
a second context is selected as the context for context-adaptively decoding the mode syntax element when
a previously decoded co-located luma block of the picture, overlapping the currently decoded block, is not being coded using a MS tool, and/or
a previously decoded co-located luma block of the picture, overlapping the currently decoded block, is not being signalled to have a zero prediction residual by way of a corresponding flag in the data stream.

A 30^{th} embodiment provides a method of block-wise encoding a picture into a data stream, the method comprising:
encoding a currently encoded block of the picture
using a selected coding option out of an activated set of one or more coding options which is configured for the currently encoded block based on spatial information of the currently encoded block, or
using a selected coding option responsive to the selected coding option being selected by a mode selection syntax element, wherein the mode selection syntax element is context-adaptively encoded into the data stream using a context selected based on the spatial information of the currently encoded block.

A 31^{st} embodiment provides the method of the 30^{th} embodiment, wherein the method comprises block-wise predicting the picture to obtain a predictor for blocks of the picture, and transform-encoding a prediction residual for the blocks.

A 32^{nd} embodiment provides the method of the 30^{th} or 31^{st} embodiment, wherein the spatial information is gained from a portion of the data stream having a previously encoded portion of the picture coded thereinto.

A 33^{rd} embodiment provides the method of the 30^{th} or 31^{st} embodiment, wherein the spatial information is gained from a one or more syntax elements of the data stream which relate to one or more previously encoded blocks of the picture.

A 34^{th} embodiment provides the method of the 30^{th} or 31^{st} embodiment, wherein the spatial information relates to prediction residual information on one or more previously encoded blocks of the picture, neighboring or overlapping the currently encoded block.

A 35^{th} embodiment provides the method of the 30^{th} or 31^{st} embodiment, wherein the spatial information relates to one or more of
whether a previously encoded block of the picture, neighboring or overlapping the currently encoded block, is coded using a set of one or more prediction residual coding options, consisting of one or more out of
a usage of a LFNST (low-frequency non-separable transform) applied onto a primary transform as a transform domain for a prediction residual of the previously encoded block,
a usage of MTS (multiple transform selection) for selecting a transform domain for the prediction residual of the previously encoded block,
a usage of TS (transform skip) for the prediction residual of the previously encoded block,
whether the previously encoded block of the picture, neighboring or overlapping the currently encoded block, has any non-zero transform coefficient representing the prediction residual of the previously encoded block,
a position of a last significant transform coefficient of a transform representing the prediction residual of a previously encoded block of the picture, neighboring or overlapping the currently encoded block, which is lastly traversed and significant when traversing the traversing transform coefficients of the transform along a coding path starting from a transform coefficient position which is inevitably coded if the previously encoded block has at least one non-zero transform coefficient.

A 36^{th} embodiment provides the method of the 30^{th} or 31^{st} embodiment, wherein the spatial information relates to
a count of previously encoded blocks of the picture within a set of previously encoded blocks of the picture, neighboring or overlapping the currently encoded block, which are coded using a set of one or more prediction residual coding options, consisting of one or more out of
a usage of a LFNST (low-frequency non-separable transform) applied onto a primary transform as a transform domain for a prediction residual of the previously encoded block,
a usage of MTS (multiple transform selection) for selecting a transform domain for the prediction residual of the previously encoded block,
a usage of TS (transform skip) for the prediction residual of the previously encoded block,
a count of previously encoded blocks of the picture, within a set of previously encoded blocks of the picture, neighboring or overlapping the currently encoded block, which have any non-zero transform coefficient representing the prediction residual of the previously encoded block, a statistical measure of statistics of a position of a last significant transform coefficient of a transform representing the prediction residual of a set of previously encoded blocks of the picture, neighboring or overlapping the currently encoded block, being lastly traversed and significant when traversing the traversing transform coefficients of the transform along a coding path starting from a transform coefficient position which is inevitably coded if the previously encoded block has at least one non-zero transform coefficient.

A 37^{th} embodiment provides the method of the 30^{th} or 31^{st} embodiment, wherein the spatial information relates to
all of a set of previously encoded blocks of the picture, neighboring or overlapping the currently encoded block, are coded using a set of one or more prediction residual coding options, consisting of one or more out of
a usage of a LFNST (low-frequency non-separable transform) applied onto a primary transform as a transform domain for a prediction residual of the previously encoded block,
a usage of MTS (multiple transform selection) for selecting a transform domain for the prediction residual of the previously encoded block,
a usage of TS (transform skip) for the prediction residual of the previously encoded block,
all of a set of previously encoded blocks of the picture, neighboring or overlapping the currently encoded block, which have any non-zero transform coefficient representing the prediction residual of the previously encoded block.

A 38^{th} embodiment provides the method of the 36^{th} or 37^{th} embodiment, wherein one or more blocks of the picture which contain predefined samples, having a predefined location relative to the currently encoded block, are appointed the set of previously encoded blocks of the picture.

A 39^{th} embodiment provides {coding option is defined by coding tool and, optional, one or more coding parameter}

The method of any of the 30^{th} to 35^{th} embodiment, wherein the one or more coding options of the activated set mutually differ in
coding tool, or
one or more coding parameters of a parametrizable coding tool.

A 40^{th} embodiment provides the method of any of the 30^{th} to 35^{th} embodiment, wherein the activated set of one or more coding options is configured for the currently encoded block based on the spatial information of the block by, for each of a set of coding tools, activating or deactivating the respective coding tool based on the spatial information to obtain an activated set of one or more coding tools, and the method comprises encoding the currently encoded block of the picture using a selected coding tool out of the activated set of one or more coding tools.

A 41^{st} embodiment provides the method of the 40^{th} embodiment, wherein the activated set of one or more coding tools is configured for the currently encoded block such that the activated set of one or more coding tools merely consists of one coding tool which is the selected coding tool.

A 42^{nd} embodiment provides the method of the 40^{th} embodiment, comprising
encoding a number n of mode selection syntax elements, with n ≥ 0, and/or
one or more mode m-ary selection syntax elements, with m > 0,
into the data stream, and
selecting the selected coding mode out of the activated set of one or more coding tools, wherein n or m is set depending on the spatial information.

A 43^{rd} embodiment provides the method of the 40^{th} embodiment, wherein the method comprises, depending on a predetermined coding tool out of the set of one or more coding tools, being deactivated or activated based on the spatial information,
inferring that a predetermined mode selection syntax element specifically associated with the predetermined coding tool, has a state deselecting the predetermined coding tool, or
encoding the predetermined mode selection syntax element into the data stream and appointing the predetermined coding tool the selected coding tool depending on the predetermined mode selection syntax element.

A 44^{th} embodiment provides the method of any of the 40^{th} to 43^{rd} embodiment, wherein the set of coding tools comprises one or more of
one or more intra prediction tools such as DIMD (Decoder Side Intra Mode Derivation), TIMD (Template-Based Intra Mode Derivation), SGPM (Spatial Geometric Partitioning Mode),
one or more inter prediction tools such as affine, DMVR (Decoder-Side Affine Model Refinement), GPM (Geometric Partitioning Mode),
one or more transform coding tools such as LFNST (Low-Frequency Non-Separable Transform), MTS (Multiple transform selection), TS (Transform Skip), SBT (Subblock Transform), JCCR (Joint Coding of Chroma Residuals),
one or more in-loop filters.

A 45^{th} embodiment provides the method of any of the 30^{th} to 44^{th} embodiment, wherein the activated set of one or more coding options is configured for the currently encoded block such that the activated set of one or more coding options excludes a DIMD tool, and a predetermined mode selection syntax element which is for selecting whether the DIMD tool is to be used for encoding the currently encoded block, and is otherwise encoded into data stream, is inferred to have a state deselecting the DIMD tool,
and/or
the activated set of one or more coding options is configured for the currently encoded block such that the activated set of one or more coding options excludes a TIMD tool, and a predetermined mode selection syntax element which is for selecting whether the TIMD tool is to be used for encoding the currently encoded block, and is otherwise encoded into data stream, is inferred to have a state deselecting the TIMD tool,
responsive to
all of a set of previously encoded blocks of the picture, neighboring the currently encoded block, or a more than a predetermined number of previously encoded blocks in said set, being coded using a TS tool and/or
all of a set of previously encoded blocks of the picture, neighboring the currently encoded block, or a more than a predetermined number of previously encoded blocks in said set, being signalled to have a zero prediction residual by way of a corresponding flag in the data stream.

A 46^{th} embodiment provides the method of any of the 30^{th} to 45^{th} embodiment, wherein the activated set of one or more coding options is configured for the currently encoded block such that the activated set of one or more coding options excludes a LFNST tool, and a predetermined mode selection syntax element which is for selecting whether the LFNST tool is to be used for encoding the currently encoded block, and is otherwise encoded into data stream, is inferred to have a state deselecting the LFNST tool,
responsive to
all of a set of previously encoded blocks of the picture, neighboring the currently encoded block, or a more than a predetermined number of previously encoded blocks in said set, being coded using a TS tool and/or
all of a set of previously encoded blocks of the picture, neighboring the currently decoded block, or a more than a predetermined number of previously encoded blocks in said set, being signalled to have a zero prediction residual by way of a corresponding flag in the data stream.

A 47^{th} embodiment provides the method of any of the 30^{th} to 46^{th} embodiment, wherein the activated set of one or more coding options is configured for the currently encoded block such that the activated set of one or more coding options excludes a TS tool, and a predetermined mode selection syntax element which is for selecting whether the TS tool is to be used for encoding the currently encoded block, and is otherwise encoded into the data stream, is inferred to have a state deselecting the TS tool,
responsive to
all of a set of previously encoded blocks of the picture, neighboring the currently encoded block, or a more than a predetermined number of previously encoded blocks in said set, being coded using a LFNST tool.

A 48th embodiment provides the method of any of the 30^{th} to 47^{th} embodiment, wherein the currently encoded block is a chroma block, and
the activated set of one or more coding options is configured for the currently encoded block such that the activated set of one or more coding options excludes a JCCR (joint coding of chroma residuals) mode, and a predetermined mode selection syntax element which is for selecting whether the JCCR tool is to be used for encoding the currently encoded block, and is otherwise encoded into data stream, is inferred to have a state deselecting the JCCR tool,
responsive to
a previously encoded co-located luma block of the picture, overlapping the currently encoded block, being coded using a MS tool, and/or
a previously encoded co-located luma block of the picture, overlapping the currently encoded block, being signalled to have a zero prediction residual by way of a corresponding flag in the data stream.

A 49^{th} embodiment provides the method of any of the 30^{th} to 48^{th} embodiment, comprising
based on the spatial information of the block, selecting a selected context out of a set of available contexts for the mode selection syntax element,
context-adaptively arithmetically encoding the mode selection syntax element using a probability estimate of the selected context,
adapting the probability estimate of the selected context based on the mode selection syntax element,
encoding the currently encoded block, depending the mode selection syntax element, using or non-using the selected coding option.

A 50th embodiment provides the method of any of the 30^{th} to 49^{th} embodiment, wherein the selected coding tools option comprises one or more of
one or more intra prediction tools such as DIMD, TIMD, SGPM,
one or more inter prediction tools such as affine, DMVR, GPM,
one or more transform coding tools such as LFNST, MTS, TS, SBT, JCCR,
one or more in-loop filters.

A 51^{st} embodiment provides the method of any of the 30^{th} to 50^{th} embodiment, wherein the selected coding option involves a TIMD tool and/or DIMD tool.

A 52^{nd} embodiment provides the method of any of the 30^{th} to 51^{st} embodiment, wherein
a first context is selected as the context for context-adaptively encoding the mode syntax element when
all of a set of previously encoded blocks of the picture, neighboring the currently encoded block, or a more than a predetermined number of previously encoded blocks in said set, being coded using a TS tool and/or
all of a set of previously encoded blocks of the picture, neighboring the currently encoded block, or a more than a predetermined number of previously encoded blocks in said set, being signalled to have a zero prediction residual by way of a corresponding flag in the data stream, and
a second context is selected as the context for context-adaptively encoding the mode syntax element when
not all of a set of previously encoded blocks of the picture, neighboring the currently encoded block, or a more than a predetermined number of previously encoded blocks in said set, being coded using a TS tool and/or
not all of a set of previously encoded blocks of the picture, neighboring the currently encoded block, or a more than a predetermined number of previously encoded blocks in said set, being signalled to have a zero prediction residual by way of a corresponding flag in the data stream.

A 53^{rd} embodiment provides the method of any of the 30^{th} to 52^{nd} embodiment, wherein the selected coding option involves a LFNST tool.

A 54^{th} embodiment provides the method of any of the 30th to 52^{nd} embodiment, wherein
a first context is selected as the context for context-adaptively encoding the mode syntax element when
all of a set of previously encoded blocks of the picture, neighboring the currently encoded block, or a more than a predetermined number of previously encoded blocks in said set, being coded using a TS tool and/or
all of a set of previously encoded blocks of the picture, neighboring the currently encoded block, or a more than a predetermined number of previously encoded blocks in said set, being signalled to have a zero prediction residual by way of a corresponding flag in the data stream, and
a second context is selected as the context for context-adaptively encoding the mode syntax element when
not all of a set of previously encoded blocks of the picture, neighboring the currently encoded block, or a more than a predetermined number of previously encoded blocks in said set, being coded using a TS tool and/or
not all of a set of previously encoded blocks of the picture, neighboring the currently encoded block, or a more than a predetermined number of previously encoded blocks in said set, being signalled to have a zero prediction residual by way of a corresponding flag in the data stream.

A 55^{th} embodiment provides the method of any of the 30^{th} to 54^{th} embodiment, wherein the selected coding option involves a TS tool.

A 56^{th} embodiment provides the method of any of the 30^{th} to 55^{th} embodiment, wherein a first context is selected as the context for context-adaptively encoding the mode syntax element when
all of a set of previously encoded blocks of the picture, neighboring the currently encoded block, or a more than a predetermined number of previously encoded blocks in said set, being coded using a LFNST tool,
a second context is selected as the context for context-adaptively encoding the mode syntax element when
not all of a set of previously encoded blocks of the picture, neighboring the currently encoded block, or a more than a predetermined number of previously encoded blocks in said set, being coded using a LFNST tool.

A 57^{th} embodiment provides the method of any of the 30^{th} to 56^{th} embodiment, wherein the selected coding option involves a JCCR tool.

A 58^{th} embodiment provides the method of any of the 30^{th} to 57^{th} embodiment, wherein
a first context is selected as the context for context-adaptively encoding the mode syntax element when
a previously encoded co-located luma block of the picture, overlapping the currently encoded block, being coded using a MS tool, and/or
a previously encoded co-located luma block of the picture, overlapping the currently encoded block, being signalled to have a zero prediction residual by way of a corresponding flag in the data stream,
a second context is selected as the context for context-adaptively encoding the mode syntax element when
a previously encoded co-located luma block of the picture, overlapping the currently encoded block, is not being coded using a MS tool, and/or
a previously encoded co-located luma block of the picture, overlapping the currently encoded block, is not being signalled to have a zero prediction residual by way of a corresponding flag in the data stream.

A 59^{th} embodiment provides an apparatus for block-wise decoding a picture from a data stream, the apparatus configured to:
decode a currently decoded block of the picture
using a selected coding option out of an activated set of one or more coding options which is configured for the currently decoded block based on spatial information of the currently decoded block, or
using a selected coding option responsive to the selected coding option being selected by a mode selection syntax element, wherein the mode selection syntax element is context-adaptively decoded from the data stream using a context selected based on the spatial information of the currently decoded block.

A 60^{th} embodiment provides an apparatus for block-wise encoding a picture into a data stream, the apparatus configured to:
encode a currently decoded block of the picture
using a selected coding option out of an activated set of one or more coding options which is configured for the currently decoded block based on spatial information of the currently decoded block, or
using a selected coding option responsive to the selected coding option being selected by a mode selection syntax element, wherein the mode selection syntax element is context-adaptively decoded from the data stream using a context selected based on the spatial information of the currently decoded block.

A 61^{st} embodiment provides a data stream having encoded there into a picture, wherein the data stream is encoded using a method according to the 30^{th} embodiment.

A 62^{nd} embodiment provides a non-transitory digital storage medium having a computer program stored thereon to perform the method according to the 1^{st} embodiment when said computer program is run by a computer.

### References

[1] H.264: Advanced video coding for generic audiovisual services, https://www.itu.int/rec/T-REC-H.264-202108-P/en
[2] H.265: High efficiency video coding, https://www.itu.int/rec/T-REC-H.265-202108-P/en
[3] H.266: Versatile video coding, https://www.itu.int/rec/T-REC-H.266-202008-I/en
[4] AV1 Bitstream & Decoding Process Specification, http://aomedia.org/av1/specification/
[5] Algorithm description of Enhanced Compression Model 13 (ECM 13), document JVET-AH2025, https://ivet-experts.org/doc_end_user/documents/33 Teleconference/wg11/JVET-AG2025-v1.zip

## Claims

1. A method of block-wise decoding a picture from a data stream, the method comprising:
decoding a currently decoded block of the picture
using a selected coding option out of an activated set of one or more coding options which is configured for the currently decoded block based on spatial information of the currently decoded block, or
using a selected coding option responsive to the selected coding option being selected by a mode selection syntax element, wherein the mode selection syntax element is context-adaptively decoded from the data stream using a context selected based on the spatial information of the currently decoded block,
block-wise predicting the picture to obtain a predictor for blocks of the picture, and transform-decoding a prediction residual for the blocks.

2. The method of claim 1, wherein the spatial information relates to or
is gained from one or more of the following:
i. a portion of the data stream having a previously decoded portion of the picture coded thereinto, or
ii. one or more syntax elements of the data stream which relate to one or more previously decoded blocks of the picture,
iii. a prediction residual information on one or more previously decoded blocks of the picture, neighboring or overlapping the currently decoded block
iv. whether a previously decoded block of the picture, neighboring or overlapping the currently decoded block, is coded using a set of one or more prediction residual coding options, consisting of one or more out of
a) a usage of a LFNST (low-frequency non-separable transform) applied onto a primary transform as a transform domain for a prediction residual of the previously decoded block,
b) a usage of MTS (multiple transform selection) for selecting a transform domain for the prediction residual of the previously decoded block,
v. whether the previously decoded block of the picture, neighboring or overlapping the currently decoded block, has any non-zero transform coefficient representing the prediction residual of the previously decoded block,
vi. a position of a last significant transform coefficient of a transform representing the prediction residual of a previously decoded block of the picture, neighboring or overlapping the currently decoded block, which is lastly traversed and significant when traversing the traversing transform coefficients of the transform along a coding path starting from a transform coefficient position which is inevitably coded if the previously decoded block has at least one non-zero transform coefficient,
vii. a count of previously decoded blocks of the picture within a set of previously decoded blocks of the picture, neighboring or overlapping the currently decoded block, which are coded using a set of one or more prediction residual coding options, consisting of one or more out of
c) a usage of a LFNST (low-frequency non-separable transform) applied onto a primary transform as a transform domain for a prediction residual of the previously decoded block,
d) a usage of MTS (multiple transform selection) for selecting a transform domain for the prediction residual of the previously decoded block,
e) a usage of TS (transform skip) for the prediction residual of the previously decoded block,
viii. a count of previously decoded blocks of the picture, within a set of previously decoded blocks of the picture, neighboring or overlapping the currently decoded block, which have any non-zero transform coefficient representing the prediction residual of the previously decoded block,
ix. a statistical measure of statistics of a position of a last significant transform coefficient of a transform representing the prediction residual of a set of previously decoded blocks of the picture, neighboring or overlapping the currently decoded block, being lastly traversed and significant when traversing the traversing transform coefficients of the transform along a coding path starting from a transform coefficient position which is inevitably coded if the previously decoded block has at least one non-zero transform coefficient,
x. all of a set of previously decoded blocks of the picture, neighboring or overlapping the currently decoded block, are coded using a set of one or more prediction residual coding options, consisting of one or more out of
f) a usage of a LFNST (low-frequency non-separable transform) applied onto a primary transform as a transform domain for a prediction residual of the previously decoded block,
g) a usage of MTS (multiple transform selection) for selecting a transform domain for the prediction residual of the previously decoded block,
h) a usage of TS (transform skip) for the prediction residual of the previously decoded block,
xi. all of a set of previously decoded blocks of the picture, neighboring or overlapping the currently decoded block, which have any non-zero transform coefficient representing the prediction residual of the previously decoded block.

3. The method of any of claims 1 or 2, wherein the one or more coding options of the activated set mutually differ in
coding tool, or
one or more coding parameters of a parametrizable coding tool.

4. The method of any of claims 1 or 2, wherein the activated set of one or more coding options is configured for the currently decoded block based on the spatial information of the block by, for each of a set of coding tools, activating or deactivating the respective coding tool based on the spatial information to obtain an activated set of one or more coding tools, and the method comprises decoding the currently decoded block of the picture using a selected coding tool out of the activated set of one or more coding tools.

5. The method of claim 4, wherein the activated set of one or more coding tools is configured for the currently decoded block such that the activated set of one or more coding tools merely consists of one coding tool which is the selected coding tool,
or wherein the method comprises either
decoding a number n of mode selection syntax elements, with n ≥ 0, and/or
one or more mode m-ary selection syntax elements, with m > 0,
from the data stream, and
selecting the selected coding mode out of the activated set of one or more coding tools,
wherein n or m is set depending on the spatial information, or
depending on a predetermined coding tool out of the set of one or more coding tools, being deactivated or activated based on the spatial information,
inferring that a predetermined mode selection syntax element specifically associated with the predetermined coding tool, has a state deselecting the predetermined coding tool, or
decoding the predetermined mode selection syntax element from the data stream and appointing the predetermined coding tool the selected coding tool depending on the predetermined mode selection syntax element.

6. The method of any of claims 1 to 5, wherein
the activated set of one or more coding options is configured for the currently decoded block such that the activated set of one or more coding options excludes a DIMD tool, and a predetermined mode selection syntax element which is for selecting whether the DIMD tool is to be used for decoding the currently decoded block, and is otherwise decoded from data stream, is inferred to have a state deselecting the DIMD tool,
and/or
the activated set of one or more coding options is configured for the currently decoded block such that the activated set of one or more coding options excludes a TIMD tool, and a predetermined mode selection syntax element which is for selecting whether the TIMD tool is to be used for decoding the currently decoded block, and is otherwise decoded from data stream, is inferred to have a state deselecting the TIMD tool,
responsive to
all of a set of previously decoded blocks of the picture, neighboring the currently decoded block, or a more than a predetermined number of previously decoded blocks in said set, being coded using a TS tool and/or
all of a set of previously decoded blocks of the picture, neighboring the currently decoded block, or a more than a predetermined number of previously decoded blocks in said set, being signalled to have a zero prediction residual by way of a corresponding flag in the data stream.

7. The method of any of claims 1 to 6, wherein
the activated set of one or more coding options is configured for the currently decoded block such that the activated set of one or more coding options excludes a LFNST tool, and a predetermined mode selection syntax element which is for selecting whether the LFNST tool is to be used for decoding the currently decoded block, and is otherwise decoded from data stream, is inferred to have a state deselecting the LFNST tool,
responsive to
all of a set of previously decoded blocks of the picture, neighboring the currently decoded block, or a more than a predetermined number of previously decoded blocks in said set, being coded using a TS tool and/or
all of a set of previously decoded blocks of the picture, neighboring the currently decoded block, or a more than a predetermined number of previously decoded blocks in said set, being signalled to have a zero prediction residual by way of a corresponding flag in the data stream.

8. The method of any of claims 1 to 7, wherein
the activated set of one or more coding options is configured for the currently decoded block such that the activated set of one or more coding options excludes a TS tool, and a predetermined mode selection syntax element which is for selecting whether the TS tool is to be used for decoding the currently decoded block, and is otherwise decoded from data stream, is inferred to have a state deselecting the TS tool,
responsive to
all of a set of previously decoded blocks of the picture, neighboring the currently decoded block, or a more than a predetermined number of previously decoded blocks in said set, being coded using a LFNST tool.

9. The method of any of claims 1 to 8, wherein the currently decoded block is a chroma block, and
the activated set of one or more coding options is configured for the currently decoded block such that the activated set of one or more coding options excludes a JCCR (joint coding of chroma residuals) mode, and a predetermined mode selection syntax element which is for selecting whether the JCCR tool is to be used for decoding the currently decoded block, and is otherwise decoded from data stream, is inferred to have a state deselecting the JCCR tool,
responsive to
a previously decoded co-located luma block of the picture, overlapping the currently decoded block, being coded using a TS tool, and/or
a previously decoded co-located luma block of the picture, overlapping the currently decoded block, being signalled to have a zero prediction residual by way of a corresponding flag in the data stream.

10. The method of any of claims 1 to 9, comprising
based on the spatial information of the block, selecting a selected context out of a set of available contexts for the mode selection syntax element,
context-adaptively arithmetically decoding the mode selection syntax element using a probability estimate of the selected context,
adapting the probability estimate of the selected context based on the mode selection syntax element,
decoding the currently decoded block, depending the mode selection syntax element, using or
non-using the selected coding option.

11. The method of any of claims 1 to 10, wherein a first and a second context are defined and selected according to one of the following scenarios:
i1) the first context is selected as the context for context-adaptively decoding the mode syntax element when
• all of a set of previously decoded blocks of the picture, neighboring the currently decoded block, or a more than a predetermined number of previously decoded blocks in said set, being coded using a TS tool and/or
• all of a set of previously decoded blocks of the picture, neighboring the currently decoded block, or a more than a predetermined number of previously decoded blocks in said set, being signalled to have a zero prediction residual by way of a corresponding flag in the data stream, and
the second context is selected as the context for context-adaptively decoding the mode syntax element when
• not all of a set of previously decoded blocks of the picture, neighboring the currently decoded block, or a more than a predetermined number of previously decoded blocks in said set, being coded using a TS tool and/or
• not all of a set of previously decoded blocks of the picture, neighboring the currently decoded block, or a more than a predetermined number of previously decoded blocks in said set, being signalled to have a zero prediction residual by way of a corresponding flag in the data stream;
i2) the first context is selected as the context for context-adaptively decoding the mode syntax element when
• all of a set of previously decoded blocks of the picture, neighboring the currently decoded block, or a more than a predetermined number of previously decoded blocks in said set, being coded using a TS tool and/or
• all of a set of previously decoded blocks of the picture, neighboring the currently decoded block, or a more than a predetermined number of previously decoded blocks in said set, being signalled to have a zero prediction residual by way of a corresponding flag in the data stream, and
the second context is selected as the context for context-adaptively decoding the mode syntax element when
• not all of a set of previously decoded blocks of the picture, neighboring the currently decoded block, or a more than a predetermined number of previously decoded blocks in said set, being coded using a TS tool and/or
• not all of a set of previously decoded blocks of the picture, neighboring the currently decoded block, or a more than a predetermined number of previously decoded blocks in said set, being signalled to have a zero prediction residual by way of a corresponding flag in the data stream;
i3) the first context is selected as the context for context-adaptively decoding the mode syntax element when
• all of a set of previously decoded blocks of the picture, neighboring the currently decoded block, or a more than a predetermined number of previously decoded blocks in said set, being coded using a LFNST tool,
the second context is selected as the context for context-adaptively decoding the mode syntax element when
• not all of a set of previously decoded blocks of the picture, neighboring the currently decoded block, or a more than a predetermined number of previously decoded blocks in said set, being coded using a LFNST tool;
i4) the first context is selected as the context for context-adaptively decoding the mode syntax element when
• a previously decoded co-located luma block of the picture, overlapping the currently decoded block, being coded using a TS tool, and/or
• a previously decoded co-located luma block of the picture, overlapping the currently decoded block, being signalled to have a zero prediction residual by way of a corresponding flag in the data stream,
the second context is selected as the context for context-adaptively decoding the mode syntax element when
• a previously decoded co-located luma block of the picture, overlapping the currently decoded block, is not being coded using a MS tool, and/or
• a previously decoded co-located luma block of the picture, overlapping the currently decoded block, is not being signalled to have a zero prediction residual by way of a corresponding flag in the data stream.

12. A method of block-wise encoding a picture into a data stream, the method comprising:
encoding a currently encoded block of the picture
using a selected coding option out of an activated set of one or more coding options which is configured for the currently encoded block based on spatial information of the currently encoded block, or
using a selected coding option responsive to the selected coding option being selected by a mode selection syntax element, wherein the mode selection syntax element is context-adaptively encoded into the data stream using a context selected based on the spatial information of the currently encoded block.

13. An apparatus for block-wise decoding a picture from a data stream, the apparatus configured to:
decode a currently decoded block of the picture
using a selected coding option out of an activated set of one or more coding options which is configured for the currently decoded block based on spatial information of the currently decoded block, or
using a selected coding option responsive to the selected coding option being selected by a mode selection syntax element, wherein the mode selection syntax element is context-adaptively decoded from the data stream using a context selected based on the spatial information of the currently decoded block.

14. An apparatus for block-wise encoding a picture into a data stream, the apparatus configured to:
encode a currently decoded block of the picture
using a selected coding option out of an activated set of one or more coding options which is configured for the currently decoded block based on spatial information of the currently decoded block, or
using a selected coding option responsive to the selected coding option being selected by a mode selection syntax element, wherein the mode selection syntax element is context-adaptively decoded from the data stream using a context selected based on the spatial information of the currently decoded block.

15. A data stream having encoded there into a picture, wherein the data stream is encoded using a method according to claim 12.
